(19) Europäisches Patentamt / European Patent Office / Office européen des brevets

(11) EP 2 261 276 B1

(12) EUROPEAN PATENT SPECIFICATION

(45) Date of publication and mention
of the grant of the patent:
**28.01.2015 Bulletin 2015/05**

(51) Int Cl.:
*H01M 2/16* [(2006.01)]     *C08J 5/18* [(2006.01)]
*C08L 23/04* [(2006.01)]     *C08L 23/06* [(2006.01)]
*C08L 23/10* [(2006.01)]     *C08L 23/12* [(2006.01)]

(21) Application number: **09729155.3**

(22) Date of filing: **26.03.2009**

(86) International application number:
**PCT/JP2009/056155**

(87) International publication number:
**WO 2009/123015 (08.10.2009 Gazette 2009/41)**

(54) **POLYOLEFIN MICROPOROUS MEMBRANE AND PRODUCTS OF WINDING**

MIKROPORÖSE POLYOLEFINMEMBRAN UND WICKLUNGSPRODUKTE

MEMBRANE MICROPOREUSE DE POLYOLÉFINE ET PRODUITS D'ENROULAGE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 JP 2008091572**
**31.03.2008 JP 2008091573**

(43) Date of publication of application:
**15.12.2010 Bulletin 2010/50**

(73) Proprietor: **Asahi Kasei E-materials Corporation**
**Tokyo 101-8101 (JP)**

(72) Inventors:
• **TAKEDA, Hisashi**
**Tokyo 101-8101 (JP)**
• **INAGAKI, Daisuke**
**Tokyo 101-8101 (JP)**
• **IIDANI, Kazuya**
**Tokyo 101-8101 (JP)**
• **IZUMI, Yoshihiko**
**Tokyo 101-8101 (JP)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) References cited:
**EP-A1- 0 547 237    WO-A1-2007/015416**
**JP-A- 10 298 324    JP-A- 2004 152 614**

• **DATABASE WPI Week 199434 Thomson Scientific, London, GB; AN 1994-276453 XP002669905, & JP 6 208849 A (ASAHI KASEI KOGYO KK) 26 July 1994 (1994-07-26)**

## Description

Technical Field

The present invention relates to a polyolefin microporous film and a roll.

Background Art

Polyolefin microporous films are used for micro filters, separators for electronic devices such as batteries, capacitors, and materials for fuel cells, and the like.

Generally, lithium ion batteries are produced through a step of spirally rolling a strip positive electrode and a strip negative electrode which are coated with an electrode active material and a separator. The separator used at this step usually has a shape of a roll obtained by slitting a material into a predetermined width (cutting the material into an elongated shape) and winding the slit material around a roll core.

When a polyolefin microporous film is processed into such a roll, the process is through a step (slitting step) of winding the polyolefin microporous film into a shape of a roll (mother roll), and subsequently slitting the film into a predetermined width while the film is fed from the mother roll, thereby to be processed into a roll according to application. In recent years, the lengths of the electrode and the separator to be rolled have tended to be increased along with increase in the capacity of the batteries. Additionally, high-speed production in order to improve productivity at a rolling step may be performed. For that reason, there is a demand for a separator roll of high quality free from raised edges, sllipage, curvature, and wrinkles, for example.

Patent Document 1 discloses a polyolefin microporous film containing 5 to 30% by weight of polypropylene having a weight average molecular weight of not less than $1 \times 10^4$, in which thickness fluctuation of not more than 1 mm of squares horizontally adjacent to each other in a surface direction of the film surface is not less than $\pm$ 1 $\mu$m. Patent Document 1 shows that a curvature when 1 m of a separator roll slit into 60 mm in width and 500 m in length is rolled is reduced. Patent Document 1 discloses a polyolefin microporous film in which the total value of a tensile strength at break in a machine direction (which is the same as the length direction of the film and hereinafter, sometimes abbreviated as "MD") and a tensile strength at break in a transverse direction (which is a direction orthogonal to the machine direction, the same as the width direction of the film, and hereinafter, sometimes abbreviated as "TD") is within a specified range, and the total value of a MD tensile elongation at break and a TD tensile elongation at break is within a specified range.

Patent Document 2 discloses a polyolefin microporous film containing 5 to 35% by weight of polypropylene having a weight average molecular weight of not less than 300,000.

Patent Document 3 discloses a microporous film containing, as a main component, fibril having a shape of a vein.

Patent Document 4 discloses a microporous film aiming at reducing formation of a wrinkle at the time of rolling a separator and an electrode body, in which a ratio of a TD tension modulus of elasticity to a MD tension modulus of elasticity of the separator is 0.8 to 5.0.

Patent Document 1: Japanese Patent Application Laid-Open No. 2006-124652
Patent Document 2: Japanese Patent No. 3699561
Patent Document 3: Japanese Patent No. 3746848
Patent Document 4: Japanese Patent Application Laid-Open No. 2001-229971

JPH06208849 relates to a fine porous film formed from a polyolefin composition comprising: a) 1-98% by weight of a first component composed of polyethylene, b) 1-50% by weight of a second component composed of polypropylene and c) 1-50% by weight of a third component composed of ethylene-propylene copolymer. Example 1 discloses a microporous membrane formed from a composition comprising a polyethylene having a viscosity average molecular weight of 300,000, a polypropylene having a viscosity average molecular weight of 400,000 and an ethylene-propylene copolymer having a viscosity average molecular weight of 270,000.

JP2004152614 relates to a fine porous membrane for separator used for rechargeable lithium ion batteries containing 50% by weight or more polyethylene, and a mixture of two polypropylenes, the first polypropylene having a viscosity average molecular weight of 50,000 or less and the second polypropylene having a viscosity average molecular weight of 200,000 or more.

Disclosure of the Invention

Problems to be Solved by the Invention

However, the inventions described in Patent Documents 1 to 4 cannot sufficiently reduce the occurrence of the raised edge in the roll of the polyolefin microporous film.

Then, the present invention is made in consideration of the above-mentioned circumstances. An object of the present invention is to provide a polyolefin microporous film and a roll thereof that can sufficiently reduce the occurrence of a raised edge at a slitting step such as a slitting step at the time of producing the polyolefin microporous film and a slitting step at the time of processing the polyolefin microporous film into a roll.

Means for Solving the Problems

The present inventors conducted extensive research in order to solve the above-mentioned problems. As a result, the present inventors surprisingly found out that a polyolefin microporous film having a specified composition can solve the above-mentioned problems, and completed the present invention. Namely, the present invention is as follows.

[1] A polyolefin microporous film comprising a polyolefin composition containing a polyethylene, a first polypropylene having a viscosity average molecular weight of not less than 50,000 and less than 300,000, and a second polypropylene having a viscosity average molecular weight of not less than 300,000.

[2] The polyolefin microporous film of [1], wherein the viscosity average molecular weight of the second polypropylene is 300,000 to 1,000,000.

[3] The polyolefin microporous film of [1] or [2], wherein the viscosity average molecular weight of the polyethylene is 50,000 to 10,000,000.

[4] The polyolefin microporous film according to any one of [1] to [3], wherein a mass ratio of the polypropylene to the total amount of polyethylene and polypropylene in the polyolefin composition is 3 to 30% by mass.

[5] The polyolefin microporous film according to any one of [1] to [4], wherein a mass ratio of the first polypropylene to the total amount of the first polypropylene and the second polypropylene in the polyolefin composition is 10 to 90% by mass.

[6] The polyolefin microporous film according to any one of [1] to [5], wherein the film has a thickness of 1 to 14 $\mu$m.

[7] The polyolefin microporous film according to any one of [1] to [6], wherein the film has a tensile strength at break in a transverse direction of 100 to 230 MPa.

[8] The polyolefin microporous film according to any one of [1] to [7], wherein the film has a tensile elongation at break in a transverse direction is 10 to 110%.

[9] The polyolefin microporous film according to any one of [1] to [8], wherein a ratio of a tensile strength at break in a lengthwise direction to a tensile strength at break in a transverse direction is 0.8 to 1.3.

[10] The polyolefin microporous film according to any one of [1] to [9], wherein a thermal shrinkage rate in a transverse direction at 130°C is not more than 20%.

[11] The polyolefin microporous film according to any one of [1] to [10], wherein the polyolefin composition contains a polyethylene having a viscosity average molecular weight higher than the viscosity average molecular weight of the first polypropylene.

[12] The polyolefin microporous film according to any one of [1] to [11], wherein the polyolefin composition comprises a polyethylene having a viscosity average molecular weight higher than the viscosity average molecular weight of the first polypropylene and lower than the viscosity average molecular weight of the second polypropylene:

[13] The polyolefin microporous film according to any one of [1] to [12], wherein the polyolefin composition comprises a polyethylene having a viscosity average molecular weight equal to or higher than the viscosity average molecular weight of the second polypropylene.

[14] A separator for a lithium ion battery, comprising a polyolefin microporous film according to any one of [1] to [13].

[15] A roll comprising a polyolefin microporous film according to any one of [1] to [13], the polyolefin microporous film being rolled.

Effect of the Invention

The polyolefin microporous film according to the present invention can provide a polyolefin microporous film and a roll thereof that can sufficiently reduce the occurrence of a raised edge at a slitting step such as a slitting step at the time of producing the polyolefin microporous film and a slitting step at the time of processing the polyolefin microporous film into a roll.

Brief Description of the Drawings

Figure 1 is a schematic view of a shutdown temperature and meltdown temperature measurement apparatus;

Figure 2 is a schematic view of a roll obtained by slitting and rolling a polyolefin microporous film; and
Figure 3 is a schematic view showing a state of a raised edge in a roll.

Explanations of Letters or Numerals

1: Microporous film
2A, 2B: Nickel foil
3A, 3B: Glass plate
4: Electric resistance measuring device
5: Thermocouple
6: Thermometer
7: Data collector
8: Oven

Best Modes for Carrying Out the Invention

Hereinafter, best modes for carrying out the present invention (hereinafter, abbreviated as a "present embodiment.") will be described in detail. The present invention will not be limited to the present embodiments given below, and various modifications can be made within the scope of the gist, and can be implemented.

[First embodiment]

A polyolefin microporous film (hereinafter, simply referred to as a "microporous film") according to a first embodiment is formed from a polyolefin composition containing a polyethylene, a polypropylene (hereinafter, this polypropylene is sometimes abbreviated as "PPa") having a viscosity average molecular weight (hereinafter, sometimes abbreviated as "Mv") of more than 50,000 and less than 300,000, and a polypropylene (hereinafter, this polypropylene is sometimes abbreviated as "PPb") having an Mv of not less than 300,000.

The polyolefin composition preferably mainly contains polypropylene and polyethylene. A percentage of the total amount of polypropylene and polyethylene in the polyolefin composition is preferably not less than 50% by mass, more preferably not less than 70% by mass, still more preferably not less than 90% by mass, particularly preferably not less than 95% by mass, and may be substantially 100% by mass.

Surprisingly, the present inventors found out that a polyolefin microporous film formed from the polyolefin composition containing PPa as a polypropylene having an Mv of more than 50,000 and less than 300,000, PPb as a polypropylene having an Mv of not less than 300,000, and a polyethylene can reduce the occurrence of a raised edge at a slitting step. Although this reason is not completely clear, it is considered that this is because polyethylene and polypropylene are incompatible with each other and have an interface. Generally, it is considered that causes of the raised edges produced by slitting the film are attributed to deformation produced in a cross section such as "raised deformation" and "high edges" as explained in "Microslitting in Coating Processing," Convertech, April, 1999, for example. It is supposed that presence of PPb having a relatively high Mv brings an effect of uniform dispersion of a polypropylene matrix. On the other hand, because PPa existing in such a polypropylene matrix dispersed uniformly has a relatively low Mv, the incompatibility of polyethylene with polypropylene is increased, leading to reduced interface strength and fragility against the slitting shear. It is supposed that as a result, deformation of the film cross section caused by the slitting shear becomes small to prevent the raised edges.

The Mv of PPa is less than 300,000, preferably not more than 250,000, and more preferably not more than 200,000. The Mv of PPa is more than 50,000, and more preferably not less than 100,000. The Mv of PPb is not less than 300,000, preferably 300,000 to 1,000,000, more preferably 350,000 to 800,000, and still more preferably 350,000 to 600,000.

The Mv in the present embodiment is measured according to a method of measurement in Examples described later.

From the viewpoint of prevention of raised edges in the polyolefin microporous film, in a blending ratio (% by mass) of PPa and PPb when the total amount of PPa and PPb is 100%, preferably PPa is not less than 10%, and PPb is not more than 90%. From the viewpoint of improved quality by effective dispersion of polypropylene, preferably, PPa is not more than 90%, and PPb is not less than 10%. More preferably, PPa is 20 to 80% and PPb is 80 to 20%. Still more preferably, PPa is 30 to 70% and PPb is 70 to 30%.

Examples of polypropylenes include homopolymers thereof, ethylene propylene random copolymers, or ethylene propylene block copolymers. For a purpose of improving permeability of the polyolefin microporous film, polypropylene homopolymers containing not more than 1.0% by mol of ethylene are used. One or both of PPa and PPb may be an ethylene propylene random copolymer or an ethylene propylene block copolymer. The content of ethylene contained in the polypropylene copolymer is not more than 30% by mol, and more preferably not more than 20% by mol. The density of polypropylene is preferably 0.88 to 0.92 g/cm$^3$, and more preferably 0.90 to 0.913 g/cm$^3$. In order to prevent difficulties in porosification of the microporous film, the density is preferably not less than 0.88 g/cm$^3$. On the other hand, it is difficult to obtain polypropylenes having a density larger than 0.92 g/cm$^3$.

The above-mentioned polyolefin composition contains polyethylene from the viewpoint of reducing the occurrence of the raised edge by using incompatibility of polyethylene with polypropylene.

The Mv of polyethylene is preferably not less than 50,000 from the viewpoint of mechanical strength, and is preferably not more than 10,000,000 from the viewpoint of productivity. A more preferable Mv of polyethylene can be specified as follows:

(a) PEa is a polyethylene having an Mv higher than the Mv of PPa and lower than the Mv of PPb,
(b) PEb is a polyethylene having an Mv not less than the Mv of PPb, and
(c) PEc is a polyethylene having an Mv not more than the Mv of PPa.

The Mv of PEa is higher than the Mv of PPa from the viewpoint of suppressing reduction in strength of the polyolefin microporous film, and is lower than the Mv of PPb from the viewpoint of reducing a shutdown temperature of the polyolefin microporous film. The Mv of PEa between the Mv of PPa and the Mv of PPb allows higher-level dispersion of a raw resin. The Mv of PEa is more preferably not less than 200,000 and less than 500,000, and still more preferably 250,000 to 400,000. The Mv of PEa is preferably less than 500,000 from the viewpoint of reducing a shutdown temperature of the polyolefin microporous film, and preferably not less than 200,000 from the viewpoint of suppressing reduction in strength of the polyolefin microporous film.

Preferably, the Mv of PEb is not less than the Mv of PPb from the viewpoint of improvement in mechanical strength of the polyolefin microporous film, and not more than 10,000,000 from the viewpoint of film formability. The Mv of PEb is more preferably 500,000 to 2,000,000, still more preferably 600,000 to 1,500,000, and particularly preferably not less than 600,000 and less than 1,000,000. The Mv of PEb is preferably not less than the Mv of PPb from the viewpoint of improvement in mechanical strength of the polyolefin microporous film, and preferably not more than 10,000,000 from the viewpoint of film formability.

The Mv of PEc is preferably not less than 50,000 from the viewpoint of improvement in mechanical strength, and preferably less than 200,000 from the viewpoint of further reducing the shutdown temperature of the polyolefin microporous film. The Mv of PEc is more preferably 50,000 to 150,000.

From the viewpoint of suppressing reduction in strength of the polyolefin microporous film, the polyolefin composition according to the present embodiment preferably contains the polyethylene having the Mv higher than the Mv of PPa, namely, PEa and/or PEb.

In the case where one kind of polyethylene is used, PEa is particularly preferable, PEb is preferable next to PEa, and PEc is preferable next to PEb. Of these, PEa is preferable from the viewpoint of good dispersibility and reduction in the occurrence of the raised edge. In the case where not less than two kinds of polyethylenes are used, (d) use of PEa and PEb is preferable also from the viewpoint of improvement in mechanical strength in addition to the effect according to (a) mentioned above. Moreover, (f) use of PEc and PEa and (e) use of PEc, PEa, and PEb are each preferable from the viewpoint of low fuse properties in addition to the effects of (a) and (d). Several kinds of PEa, PEb, and PEc can be blended within the respective ranges of the Mv, and used.

In the case where the polyolefin composition contains PEa and PEb, in a blending ratio thereof (% by mass) when the total amount of PEa and PEb is 100%, preferably, PEa is not less than 10% and PEb is not more than 90% from the viewpoint of improved quality of the polyolefin microporous film and reduction in the shutdown temperature. Also preferably, PEa is not more than 90%, and PEb is not more than 10% from the viewpoint of improved quality of the polyolefin microporous film and improvement in break resistance of the film. More preferably, PEa is 30 to 70% and PEb is 70 to 30%. Still more preferably, PEa is 40 to 60% and PEb is 60 to 40%.

Moreover, from the viewpoint of preventing reduction in mechanical strength, a blending amount of PEc is preferably not more than 10% by mass to 100% by mass of the resin components other than PEc, and more preferably not more than 5% by mass.

Polyethylene is preferably a homopolymer, and may be a copolymer of ethylene and $\alpha$-olefin such as propylene, butene, pentene, hexene, and octene. The density of polyethylene is preferably 0.90 to 0.98 g/cm$^3$, more preferably 0.93 to 0.97 g/cm$^3$, and still more preferably 0.94 to 0.96 g/cm$^3$. In order to prevent difficulties in porosification of the microporous film, the density thereof is preferably not less than 0.90 g/cm$^3$. It is difficult to obtain polyethylene having a density larger than 0.98 g/cm$^3$. In polyethylene, the content of $\alpha$-olefin units based on 100% by mol of ethylene units is preferably not less than 0.1 % by mol from the viewpoint of reducing the shutdown temperature of the polyolefin microporous film. Moreover, the content of the $\alpha$-olefin units is preferably not more than 2% by mol from the viewpoint of preventing deterioration in permeability of the microporous film caused by reduction in a degree of crystallinity of a copolymer. The content of the α-olefin units is more preferably 0.1 to 1 % by mol. A polymerization catalyst for polyethylene is not particularly limited, and a Ziegler-Natta catalyst, a Phillips catalyst, a metallocene catalyst, and the like can be used.

From the viewpoint of molding processability of the microporous film, molecular weight distribution of polyethylene (weight average molecular weight (Mw)/number average molecular weight (Mn)) is preferably 3 to 20, more preferably 5 to 15, and still more preferably 6 to 10. It is also possible to adjust the molecular weight distribution of polyethylene in the range of approximately 10 to 60 by a method such as 2-step polymerization or blending when necessary, and to use polyethylene.

The molecular weight distribution in the present embodiment is a value measured with gel permeation chromatography (GPC).

In the composition ratio (% by mass) of the above-mentioned polyethylene (in the case where several kinds of polyethylenes are contained, it is the total amount thereof) and the above-mentioned polypropylene (in the case where several kinds of polypropylenes are contained, it is the total amount thereof), from the viewpoint of reduction in the raised edge of the polyolefin microporous film and improvement in mechanical strength, polyethylene is not less than 50% and polypropylene is not more than 50%. From the viewpoint of prevention of the raised edge of the polyolefin microporous film, polyethylene is not more than 97%, and polypropylene is not less than 3%. Moreover, from the viewpoint of good thickness distribution of polyolefin microporous film, polyethylene is not less than 70% and polypropylene is not more than 30%. Still more preferably, polyethylene is 80 to 95% and polypropylene is 20 to 5%, and particularly preferably, polyethylene is 85 to 93% and polypropylene is 15 to 7%.

To the above-mentioned polyolefin composition, various additives may be mixed when necessary: for example, phenol based, phosphorus based, and sulfur based antioxidants; metallic soaps such as calcium stearate and zinc stearate; ultraviolet absorbing agents, light stabilizers, crystalline nucleating agents, antistatic agents, anti-fogging agents, color pigments, inorganic fillers (inorganic particulates), and the like. Other than the above-mentioned polyethylene and polypropylene, one kind of polyolefins or not less than two kinds thereof such as low density polyethylenes and polymethylpentenes and thermoplastic resins other than polyolefins may be contained in the polyolefin composition.

The Mv of the polyolefin microporous film is preferably not less than 100,000 and not more than 1,200,000. More preferably, the Mv is not less than 300,000 and not more than 800,000. At an Mv of the microporous film of less than 100,000, break resistance of the film at the time of melting may be insufficient. At an Mv of the microporous film exceeding 1,200,000, production through an extrusion step is difficult, or relaxation of a contractive force at the time of melting is slow so that thermal resistance may be inferior.

The thickness of the polyolefin microporous film is preferably not less than 1 μm from the viewpoint of giving proper mechanical strength, and preferably not more than 50 μm from the viewpoint of permeability. The thickness thereof is more preferably 10 to 35 μm, and is still more preferably 15 to 35 μm. Particularly in the case where the thickness is 15 to 35 μm, the above-mentioned effects including suppression of the raised edge can be more advantageously attained.

The porosity of the polyolefin microporous film is preferably not less than 20% from the viewpoint of improvement in battery performance at the time of using the polyolefin microporous film as a separator for batteries, and preferably not more than 60% from the viewpoint of preventing reduction in mechanical strength. The porosity thereof is more preferably 30% to 55%, and is still more preferably less than 35% to 50%.

The air permeability of the polyolefin microporous film is preferably 80 to 2000 seconds, more preferably 100 to 1000 seconds, and still more preferably 100 to 600 seconds. The air permeability thereof is preferably not less than 80 seconds from the viewpoint of reduction in defect rate of open circuit voltage at the time of using the polyolefin microporous film as a separator for batteries, and preferably not more than 2000 seconds from the viewpoint of permeability as the polyolefin microporous film.

The puncture strength of the microporous film is preferably 1 to 10 N, more preferably 2 to 8 N, and still more preferably 3 to 7 N. The puncture strength thereof is preferably not less than 1 N from the viewpoint of improvement in reliability when the microporous film is used as a separator, and preferably not more than 10 N from the viewpoint of preventing excessive thermal shrinkage of microporous film caused by excessive stretch orientation.

The MD tensile strength at break of the polyolefin microporous film is preferably not less than 80 MPa from the viewpoint of preventing breakage at the time of winding the polyolefin microporous film in production of batteries, and preferably not more than 300 MPa from the viewpoint of preventing breakage at the time of production of the microporous film associated with excessive molecular orientation. The MD tensile strength at break is more preferably 100 to 200 MPa, and still more preferably 120 to 200 MPa.

The MD tensile elongation at break of the microporous film is preferably not less than 10% from the viewpoint of following expansion and shrinkage at the time of charge and discharge of a battery jelly roll, and preferably not more than 150% from the viewpoint of winding properties at the time of production of batteries. The MD tensile elongation at break is more preferably 30 to 130%, still more preferably 30 to 100%, and particularly preferably 30 to 80%.

The TD tensile strength at break of the microporous film is preferably not less than 100 MPa from the viewpoint of improvement in mechanical strength, and preferably not more than 230 MPa from the viewpoint of preventing increase in heat shrinkage around the melting point of polyolefin associated with excessive molecular orientation. The TD tensile strength at break thereof is more preferably 110 to 200 MPa, still more preferably 130 to 200 MPa, and particularly preferably 140 to 180 MPa.

The TD tensile elongation at break of the microporous film is not more than 110% from the viewpoint of preventing elongation deformation of the slitted film edge cross section at the time of slitting, and preferably not less than 10% from the viewpoint of following expansion and shrinkage at the time of charge and discharge of the battery jell roll. The TD tensile elongation at break thereof is more preferably 20 to 100%, and is still more preferably 20 to 90%.

The ratio of the tensile strength at break of the microporous film is 0.8 to 1.3 from the viewpoint of preventing deformation of the slitted film edge cross section of the microporous film caused by a shearing force applied in the MD at the time of slitting, preferably 0.8 to 1.2, and more preferably 0.9 to 1.1.

In order to attain a ratio of isotropic strength at break, the ratio of the MD tensile elongation at break to the TD tensile elongation at break of the microporous film (hereinafter, referred to as a "ratio of tensile elongation at break") is preferably not more than 1.2, and more preferably not more than 1.1.

The TD thermal shrinkage rate at 130°C of the microporous film is preferably not more than 20% from the viewpoint of ensuring safety in a battery safety test, more preferably not more than 17%, and still more preferably not more than 15%.

The shutdown temperature of the polyolefin microporous film is preferably not more than 150°C under a temperature raising condition of 2°C/min from the viewpoint of improving safety at the time of raising the temperature of the battery. The shutdown temperature thereof is more preferably not more than 145°C, and is still more preferably not more than 142°C. The shutdown temperature thereof is preferably not less than 100°C from the viewpoint of preventing shutdown in an operating environment of the battery, more preferably not less than 120°C, and still more preferably not less than 130°C.

The meltdown temperature of the polyolefin microporous film is preferably not less than 190°C under a temperature raising condition of 2°C/min from the viewpoint of safety and heat resistance at the time of raising the temperature of the battery, and more preferably not less than 195°C, and still more preferably not less than 200°C.

Each of the parameters mentioned above is a value measured according to a method of measurement in Examples described later.

Hereinafter, a preferable method for producing a polyolefin microporous film according to the present embodiment will be described.

The method for producing a polyolefin microporous film according to the present embodiment preferably comprises respective steps of (a) to (e) below:

(a) a step of melt kneading of a mixture containing at least a polyolefin composition (hereinafter, also simply referred to as a "raw material") and a plasticizer such that using the plasticizer and the polyolefin composition, a uniform solution can be prepared at a temperature equal to or higher than the melting point thereof, and subsequently extruding, cooling and solidifying, and forming the mixture into a sheet (hereinafter, also referred to as a "extrusion and film cast step");

(b) a step of biaxially stretching the sheet (hereinafter, also referred to as a "stretching step");

(c) a step of extracting the plasticizer (hereinafter, also referred to as a "plasticizer extraction step"); and

(d) a heat setting step.

Preferably, the method further comprises (e) a winding step of winding the polyolefin microporous film into a rolled form after going through these steps.

Although the order and the number of times of the respective steps of (a) to (d) are not particularly limited, preferably, examples thereof include the following three patterns:

1. step (a) → step (b) → step (c) → step (d),
2. step (a) → step (b) → step (c) → step (b) → step (d), and
3. step (a) → step (c) → step (b) → step (d).

Of the above patterns, the order and the number of times of steps of patterns 1 and 2 are more preferable, and the order and number of times of pattern 1 is most preferable.

(a) Extrusion and film cast step

The extrusion and film cast step is a step of melt kneading a mixture containing at least the polyolefin composition as a raw material and a plasticizer such that using the plasticizer and the polyolefin composition, a uniform solution can be prepared at a temperature equal to or higher than the melting point thereof, thereby to obtain a kneaded product, and subsequently, extruding, and cooling and solidifying the kneaded product into a sheet.

The plasticizer refers to a nonvolatile solvent such that using the plasticizer and polyolefin, a uniform solution can be prepared at a temperature equal to or higher than the melting point of polyolefin. Here, "uniform" means no phase separation. Examples of the plasticizer include hydrocarbons such as liquid paraffin and paraffin wax, di-2-ethylhexyl phthalate (DOP), di-isodecyl phthalate, and diheptylphthalate. Liquid paraffin is preferable of these.

In the step, addition of inorganic particulates is also a preferable method. Examples of the inorganic particulates include silica, alumina, titania, zirconia, calcium carbonate, and barium carbonate. Of these, silica and alumina are preferable from the viewpoint of uniformity in melt kneading. In the case where the inorganic particulates are used, mixing granulation of the raw material, the plasticizer, and the inorganic particulates with a mixing means such as a Henschel mixer is preferable from the viewpoint of uniformly dispersing the inorganic particulates.

It is preferable that the mixed inorganic particulates be extracted at a subsequent step in the case of obtaining a polyolefin microporous film having a large porosity size and high permeability. Examples of a method for extracting inorganic particulates include a method for immersing the polyolefin microporous film in a liquid in which the inorganic particulates dissolve or contacting the polyolefin microporous film with a liquid in which the inorganic particulates dissolve. Preferably, the method for producing a microporous film comprises a step of extracting the mixed inorganic particulates between the step (c) and the step (d). Moreover, extracting no inorganic particulates is preferable from the viewpoint of improving compression resistance of the microporous film by the inorganic particulates.

A percentage (hereinafter, referred to as a "polymer concentration") of a polyolefin resin based on the total amount of the raw material and the plasticizer, and the inorganic particulates added when necessary in the mixture is preferably not less than 10% by mass from the viewpoint of molding workability at the time of film formation, and preferably not more than 90% by mass from the viewpoint of permeability of the microporous film. The percentage thereof is more preferably 20 to 60% by mass, and is still more preferably 30 to 50% by mass. Moreover, a percentage of the plasticizer based on the total amount of the plasticizer and the inorganic particulates added when necessary in the mixture is preferably not less than 50% by mass from the viewpoint of preventing reduction in quality of the microporous film caused by aggregation of the inorganic particulates, and preferably not more than 80% by mass from the viewpoint of giving a proper porosity size and permeability to the microporous film. The percentage thereof is more preferably 60 to 75% by mass.

Examples of a method for melt kneading include a method for mixing with a Henschel mixer, a ribbon blender, a tumbler blender, or the like, and subsequently melt kneading the mixture with a screw extruder such as a monoaxial extruder and a biaxial extruder, a kneader, a Banbury mixer, or the like. As the method for melt kneading the mixture, a method for melt kneading the mixture with an extruder allowing continuous running is preferable. Of the extruders, the biaxial extruder is more preferable from the viewpoint of kneading properties. The plasticizer may be mixed with the raw material with the above-mentioned Henschel mixer or the like. The plasticizer may be directly fed to the extruder at the time of melt kneading. It is also preferable from the viewpoint of preventing reduction in the Mv of the raw material that the inside of the mixer, the feeder, and the extruder at the time of melt kneading be in a nitrogen atmosphere.

The temperature at the time of melt kneading is preferably not less than 140°C from the viewpoint of dispersibility, more preferably not less than 160°C, and still more preferably not less than 180°C. Moreover, from the viewpoint of preventing reduction in the Mv of the raw material, the temperature is preferably not more than 280°C, more preferably not more than 260°C, still more preferably not more than 250°C, and most preferably not more than 240°C. During melt kneading, from the viewpoint of preventing reduction in the Mv of the raw material, addition of an antioxidant and/or an anti-thermal-deterioration agent is preferable. The amount of these to be added is preferably not less than 0.2 % by mass based on the total amount of the raw material from the viewpoint of preventing reduction in the Mv of the raw material, and preferably not more than 3% by mass from the viewpoint of economical efficiency. The amount to be added is more preferably 0.3 to 3% by mass, still more preferably 0.5 to 2% by mass, and particularly preferably 0.6 to 2% by mass. It is preferable that these conditions be satisfied so that substantial reduction in the Mv of the raw material can be prevented.

Examples of a method for further molding a kneaded product into a sheet after extruding the kneaded product obtained by melt kneading the mixture with the above-mentioned extruder or the like include a method for solidifying a kneaded product by cooling. Examples of a cooling method include a method for directly contacting a kneaded product to a refrigerant such as cold air and cooling water, and a method for contacting a kneaded product with a roll or press cooled with a refrigerant. Of these, the method for contacting a kneaded product with a roll or press cooled with a refrigerant is preferable for excellent thickness control.

(b) Stretching step

The stretching step is a step of stretching a sheet (or film) in two axial directions. Examples of a method for stretching include sequential biaxial stretching using a combination of a roll stretching machine and a tenter, and simultaneous biaxial stretching using a simultaneous biaxial tenter or inflation molding. From the viewpoint of increasing the tensile strength at break, the method for stretching is preferably the simultaneous biaxial stretching.

The stretching step can be included before the plasticizer extraction step described later (stretching before extraction) or after the plasticizer extraction step (stretching after extraction), or before and after the plasticizer extraction step (stretching before and after extraction). Of these, the stretching before extraction is preferable for improvement in mechanical strength of the polyolefin microporous film obtained.

The area streching ratio in the stretching step is preferably not less than 25 times from the viewpoint of improvement in mechanical strength of the polyolefin microporous film and good thickness distribution of the polyolefin microporous film, and preferably not more than 100 times in order to prevent increase in thermal shrinkage stress caused by excessive stretching. The area stretch ratio is more preferably 30 to 80 times, still more preferably 35 to 60 times, and particularly preferably 40 to 55 times.

The stretching temperature in the stretching step can be selected with reference to the polymer concentration. The stretching temperature in the stretching before extraction is preferably not less than 110°C from the viewpoint of preventing breakage caused by excessive stretching stress, and preferably not more than 140°C from the viewpoint of strength of the microporous film. The stretching temperature is more preferably 115 to 130°C, and still more preferably 118 to 130°C. The stretching temperature in the stretching after extraction is preferably 100°C to 170°C, more preferably 110 to 150°C, and still more preferably 110 to 140°C.

The stretching conditions in the stretching before and after extraction may be the same as the above-mentioned conditions of the stretching before extraction and stretching after extraction.

(c) Plasticizer extraction step

The extracting solvent used at the plasticizer extraction step is desirably a poor solvent to polyolefin that forms a film, a good solvent to the plasticizer, and has a boiling point lower than the melting point of polyolefin that forms the film. Examples of such an extracting solvent include hydrocarbons such as n-hexane and cyclohexane, halogenated hydrocarbons such as methylene chloride and 1,1,1-trichloroethane, non-chlorine based halogenated solvents such as hydrofluoroether and hydrofluorocarbon, alcohols such as ethanol and isopropanol, ethers such as diethylether and tetrahydrofuran, and ketones such as acetone and methyl ethyl ketone. The extracting solvent is properly selected from these, and one kind thereof is used alone, or not less than two kinds thereof are mixed and used. Of these, methylene chloride and/or methyl ethyl ketone are preferable as the extracting solvent.

Examples of a method for extracting a plasticizer include a method for extracting the plasticizer by immersing the sheet obtained at the extrusion and film cast step (cast step) or the stretching step in the extracting solvent or showering the sheet with the extracting solvent. Subsequently, the sheet may be fully dried.

(d) Heat setting step

Heat setting is an operation for reducing thermal shrinkage of the polyolefin microporous film by performing a combination of stretching at a low stretch ratio and relaxation operation in an atmosphere of a predetermined temperature on the film obtained at the preceding step by using a tenter, a roll stretching machine, and the like. The stretching at a low stretch ratio is stretching at an area stretch ratio of not more than 3.0 times.

The stretch ratio at the time of stretching at a low stretch ratio is preferably 1.1 to 3.0 times in the MD of the film and/or the TD of the film, more preferably 1.3 to 2.2 times, and still more preferably 1.4 to 2.0 times. Excessive stretching at a stretch ratio exceeding 3.0 times tends to increase a possibility of film breakage, and is not preferable.

The temperature at the time of stretching is preferably not less than 110°C in order to prevent film breakage caused by stretching, and preferably not more than 140°C from the viewpoint of preventing reduction in permeability of the polyolefin microporous film. The temperature at the time of stretching is more preferably 115 to 135°C, and still more preferably 120 to 130°C.

The relaxation operation is an operation that slightly shortens (returns) a dimension in the MD and/or TD of the film by shrinking. The relaxation ratio based on the film dimension at the time of the above-mentioned stretching at a low stretch ratio is preferably not more than 0.9 times from the viewpoint of reducing thermal shrinkage of the microporous film, more preferably not more than 0.87 times, and still more preferably not more than 0.85 times. The relaxation ratio is preferably not less than 0.65 times from the viewpoint of preventing reduction in permeability caused by excessive relaxation, more preferably not less than 0.7 times, and still more preferably not less than 0.75 times.

The temperature at the time of relaxation is preferably not less than 120°C from the viewpoint of reduction in a thermal shrinkage rate, and preferably not more than 140°C from the viewpoint of preventing reduction in permeability of the polyolefin microporous film. The temperature is more preferably 122°C to 135°C, and still more preferably 125 to 135°C.

A TD heat setting stretch ratio (proportion of the film width after relaxation (after heat setting) to the initial film width (before heat setting)) in the heat setting step is preferably not less than 0.95 times from the viewpoint of preventing deterioration of thickness distribution, and more preferably not less than 1.1 times, and still more preferably not less than 1.2 times. The TD heat setting stretch ratio is preferably not more than 2.0 times from the viewpoint of reduction in thermal shrinkage properties, more preferably not more than 1.9 times, and still preferably not more than 1.8 times. The TD heat setting stretch ratio can be calculated from a TD stretch ratio and a TD relaxation ratio in the heat setting step. Moreover, when the initial film width is 1, a proportion (times) of the film width after relaxation can be calculated by initial film width (1) $\times$ stretch ratio $\times$ relaxation ratio.

Surface treatment such as electron beam irradiation, plasma irradiation, ion beam irradiation, coating with a surface active agent, and chemical modification can be performed on the film after heat setting step when necessary.

(e) Winding step

The step is a step of winding the microporous film through the respective steps into a roll form to obtain a mother roll. The mother roll is used at a process step such as slitting. As a winding drive system, any of ordinary center drive winding, surface drive winding, center-surface drive winding, and the like can be used. Further, reducing the amount of air wound in the roll by a nip roll, a near roll, or the like in the center drive winding is also a preferable method. At the time of winding, it is preferable from the viewpoint of quality of the roll that a portion serving as a holding portion of the film end portion at the stretching step or the heat setting step be removed by slitting. As a slitting method, any can be used, for example, a score cut method in which a rotary round blade with fine roundness is pressed onto a fixed blade roll to press and cut, a shear cut method for cutting by shearing between an top blade and a bottom blade, and a razor cut method for cutting with a sharp razor or the like. Although the raised edge may occur in the mother roll by deformation of a blade cross section in any method, the polyolefin microporous film according to the present embodiment can reduce the occurrence of the raised edge. A paper core or plastic core having an outer diameter of 152.4 mm (6 inches), 203.2 mm (8 inches), or 254.0 mm (10 inches) can be used for winding, for example.

Hereinafter, a preferable aspect will be described about the slitting step of the microporous film fed from the mother roll after the winding step. In the case where the polyolefin microporous film is used as a separator for batteries, the microporous film fed from the mother roll is slit into a predetermined width according to specifications of the battery, and subsequently wound into a roll to obtain a roll as a product. The same methods as those mentioned above can be used for the winding drive method and the slitting method at that time. On the other hand, at a subsequent slitting step, a slitting apparatus of an individual drive method that controls winding tension for each roll is preferably used. At the slitting step, a slitting apparatus of an ordinary coaxial drive method can also be used. The length of the roll to be wound is preferably not less than 100 m in consideration of productivity in the time of production of batteries, more preferably not less than 500 m, and still more preferably not less than 1000 m. Moreover, the length to be wound is preferably not more than 10000 m from the viewpoint of preventing deterioration of product quality, and more preferably not more than 5000 m.

Evaluation about the occurrence of the raised edge of the roll is performed using an occurrence rate of raised edge roll as an index, and it means that at a lower value thereof, the raised edge can be more reduced. The occurrence rate of raised edge roll is preferably not more than 0.6% from the viewpoint of yield, more preferably not more than 0.4%, and still more preferably not more than 0.2%.

The value (occurrence rate of raised edge roll) is a value measured according to a measuring method in Examples described later.

In the case where the polyolefin microporous film mentioned above is used as a separator for batteries, a battery may be produced, for example, by the following method.

First, the microporous film is formed into an elongated shape having a width of 10 mm to 100 mm and a length of 200 mm to 2000 mm. This separator is layered in order of a positive electrode, a separator, a negative electrode, and a separator, or in order of a negative electrode, a separator, a positive electrode, and a separator; the layered product is wound into a circular or flat scroll to obtain a jelly roll. Further, this jelly roll is provided in a battery can, and a liquid electrolyte or a gel electrolyte is injected into the battery can. In the case where the gel electrolyte is used, a gel electrolyte prepared by impregnating the separator with a gel electrolyte in advance can also be used.

As mentioned above, the polyolefin microporous film according to the present embodiment is suitable for a separator for electronic devices such as batteries and capacitors, micro filters, and the like, and particularly suitable as a separator for lithium ion batteries.

[Second embodiment]

A polyolefin microporous film according to a second embodiment is a polyolefin microporous film formed from a polyolefin composition containing PPa, PPb, and a polyethylene having an Mv higher than the Mv of PPa. The film thickness thereof is 1 to 14 $\mu$m, the TD tensile elongation at break thereof is not more than 110%, and a ratio of the MD tensile strength at break to the TD tensile strength at break (hereinafter, referred to as a " ratio of tensile strength at break ") is 0.8 to 1.3.

Particularly in the case where the microporous film is used as a material for a separator for lithium ion batteries, there has been a demand for a polyolefin microporous film having properties such as high ionic permeability, enhanced strength, and a thinner film thickness along with higher performance and capacity of the lithium ion batteries in recent years. Of these, the thinner film thickness is often demanded other than for the above-mentioned purposes, in the case where the microporous film is used as a substrate film for an inorganic-substance-coated or an organic-substance-coated separator for batteries, and also in the case where the microporous film is used as a separator for lithium polymer batteries. In the substrate film of a separator for coating batteries, the coating product increases the thickness of the separator layer. For this reason, a polyolefin microporous film as thin as possible is needed as the substrate film. In the lithium polymer battery, ionic conductivity of a gel polymer electrolyte is smaller than an ordinary liquid electrolyte. For this reason, it is necessary to make the thickness of the separator used for the lithium polymer battery thinner (for example, not more than 14 $\mu$m), and to suppress reduction in ionic conductivity as a whole.

Generally, a resin film obtained through a stretching step is relayed between an extruder, a casting apparatus, a stretching machine, and the like with a plurality of rolls, is wound around a roll (mother roll), and is finished as a product. In that case, mechanical strength of the film is reduced as the thickness of the film is thinner. Accordingly, highly precise film guide/process technologies are needed. Particularly the polyolefin microporous film has a porous structure, and has mechanical strength lower than an ordinary non-porous structure film. For that reason, much more highly precise film guide/process technologies are needed.

Further, the polyolefin microporous film is provided as a roll obtained by slitting the mother roll similarly to the ordinary film product. Particularly in the case of a separator for batteries, the polyolefin microporous film is often through the step (slitting step) of slitting the mother roll into a width determined according to specifications of the battery, and processing the slit product into a roll. Accordingly, because the microporous film has a porous structure, also in the slitting step, still higher-level film guide/process technologies are needed as the film thickness is thinner.

Specifically, a polyolefin microporous film having a thickness of not more than 14 $\mu$m has problems that the amount of deformation of the film edge cross section of the polyolefin microporous film caused by shearing at the time of slitting is remarkable, and the raised edge is remarkable compared with the case of a polyolefin microporous film having an ordinary thickness.

Although the above-mentioned Patent Document 1 describes Example in which the thickness is 7 $\mu$m, there is no description with respect to reduction in yield at the time of processing a thin film. It is difficult to improve an original yield by the invention disclosed there.

Although a wrinkle produced in film guide/process is expected to be reduced in disclosure of Patent Document 2, there is no description about improvement in yield other than that reduction. It is also difficult to improve safety needed as a separator for batteries when a battery is abnormal.

It is difficult to improve yield at the time of processing the microporous film with the techniques disclosed in Patent Documents 3 and 4 even in the case where the film thickness is thinner.

According to the second embodiment, also in the thinner polyolefin microporous film having a thickness of not more than 14 $\mu$m, the occurrence of the raised edge in the slitting steps such as a slitting step in a production line and a slitting step at the time of processing the thinner polyolefin microporous film into a roll can be reduced. In addition, safety as a battery separator can be improved.

Namely, surprisingly, the present inventors found out that as long as a polyolefin microporous film formed from a polyolefin composition containing PPa, PPb, and polyethylene having the Mv higher than the Mv of PPa has specific physical properties, the occurrence of the raised edge in the slitting step can be reduced also in a thin film having a thickness of 1 to 14 $\mu$m.

Although this reason is not completely clear, similarly to the first embodiment, it is considered as one of the factors that polyethylene and polypropylene are incompatible with each other and have an interface.

In addition to that, the present inventors found out that a remarkable effect of preventing the raised edge is brought about by setting each of the TD tensile elongation at break and the ratio of tensile strength at break within a specific range in the polyolefin microporous film having a thickness of 1 to 14 $\mu$m. This reason, although not completely clear, is supposed as follows. First, when the polyolefin microporous film having a thickness of 1 to 14 $\mu$m is slit, it is considered that particularly the film is torn off by shearing and the slitted cross section thereof deforms, causing the raised edge. Then, it is supposed that by setting the TD tensile elongation at break within a specific range, a degree of deformation of the cross section is reduced at the time of slitting. Further, when the polyolefin microporous film having a thickness of 1 to 14 $\mu$m is slit, it is considered that particularly the microporous film easily deforms in the TD direction by tension and shearing in the MD direction at the time of slitting, and the torn surface also greatly deforms. Then, it is supposed that deformation in the TD becomes smaller by setting the ratio of the tensile strength at break within a specific range to make the strength at break in the MD and that in the TD isotropic, therefore reducing deformation of the tore surface. Then, the present inventors consider that combined with these effects, the thinner polyolefin porous film can have a remarkable effect of preventing the raised edge.

Other than the points given below, the polyolefin microporous film according to the second embodiment may be the same as in the case of the first embodiment. Description thereof will be omitted here.

The polyolefin composition contains polyethylene having the Mv higher than the Mv of PPa from the viewpoint of improvement in dispersibility of polyethylene and polypropylene and from the viewpoint of improvement in mechanical strength of the thinner polyolefin microporous film. One kind of such polyethylene is used alone, or not less than two kinds thereof are blended and used.

A more preferable Mv of polyethylene can be specified as described in the paragraph that follows, with the assumption that:

(a) PEa is a polyethylene having an Mv higher than the Mv of PPa and lower than the Mv of PPb,
(b) PEb is a polyethylene having an Mv equal to or higher than the Mv of PPb, and
(c) PEc is a polyethylene having an Mv equal to or lower than the Mv of PPa.

The Mv of PEa is higher than the Mv of PPa from the viewpoint of suppressing reduction in strength of the polyolefin microporous film, and lower than the Mv of PPb from the viewpoint of reducing the shutdown temperature of the polyolefin microporous film. Moreover, PEa having an Mv between the Mv of PPa and the Mv of PPb allows higher-level dispersion of the raw resin. The Mv of PEa is more preferably not less than 200,000 and less than 500,000, and still more preferably 250,000 to 400,000. The Mv of PEa is preferably less than 500,000 from the viewpoint of reducing the shutdown temperature of the polyolefin microporous film, and preferably not less than 200,000 from the viewpoint of suppressing reduction in strength of the polyolefin microporous film.

In the case where only one kind of polyethylene is used, PEa is particularly preferable, and PEb is preferable next to PEa. Of these, PEa is preferable from the viewpoint of good dispersibility and reduction in the occurrence of the raised edge. In the case where not less than two kinds of polyethylenes are used, c) use of PEa and PEb is preferable also from the viewpoint of improvement in mechanical strength in addition to the effect according to a) mentioned above. Further, d) use of PEc and PEa and e) use of PEc, PEa, and PEb are each preferable from the viewpoint of low fuse properties in addition to the effect according to a) and c). PEa, PEb, and PEc can also be mixed (blended) within the respective ranges of the Mv mentioned above, and used.

The thickness of the polyolefin microporous film is 1 μm to 14 μm, preferably 2 μm to 12 μm, more preferably 3 μm to 10 μm, and still more preferably 3 μm to 9 μm. A thickness of not less than 1 μm is preferable because the microporous film tends to have proper mechanical strength.

The porosity of the polyolefin microporous film is preferably 20% to 60%, more preferably 20% to 45%, still more preferably 25% to 40%, and particularly preferably 28% to 38%. The porosity thereof is preferably not less than 20% from the viewpoint of improvement in performance of the battery at the time of using the polyolefin microporous film as a separator for batteries, and preferably not more than 60% from the viewpoint of preventing reduction in mechanical strength caused by a thinner film thickness, or from the viewpoint of reducing the occurrence rate of raised edge roll at the time of slitting.

The air permeability of the polyolefin microporous film is preferably 80 to 800 seconds, more preferably 100 to 500 seconds, and still more preferably 100 to 400 seconds. The air permeability thereof is preferably not less than 80 seconds from the viewpoint of reduction in defect rate of open circuit voltage at the time of using the polyolefin microporous film as a separator for batteries, and preferably not more than 500 seconds from the viewpoint of improvement in performance of the battery.

The puncture strength of the microporous film is preferably 1 to 5 N, more preferably 1.5 to 4.5 N, and still more preferably 2 to 4.5 N. The puncture strength thereof is preferably not less than 1 N from the viewpoint of improvement in reliability when the microporous film is used as a separator, and preferably not more than 5 N from the viewpoint of preventing excessive thermal shrinkage of the microporous film caused by excessive stretch orientation.

The MD tensile strength at break, the MD tensile elongation at break, the TD tensile strength at break, the TD tensile elongation at break, the ratio of tensile strength at break, the ratio of tensile elongation at break, and the TD thermal shrinkage rate at 130°C of the polyolefin microporous film may be within the same numerical value ranges of those in the first embodiment. More preferably, in the second embodiment, these are within the above-mentioned numerical value ranges.

The shutdown temperature and meltdown temperature of the polyolefin microporous film may be within the same numerical value ranges as those in the first embodiment.

Next, a preferable method for producing a polyolefin microporous film according to the embodiment will be described.

The method for producing a polyolefin microporous film may be the same as that of the first embodiment mentioned above except the following points.

(a) At the extrusion and film cast step, the polymer concentration in the mixture is preferably not less than 10% by mass from the viewpoint of molding workability at the time of film formation, and preferably not more than 90% by mass from the viewpoint of permeability of the microporous film. The percentage is more preferably 20 to 60% by mass, and still more preferably 25 to 40% by mass.

(b) At the stretching step, a sheet (or film) is stretched in the TD not less than 6 times from the viewpoint of increasing the TD tensile strength at break. The TD stretch ratio is more preferably not less than 7 times. By stretching in the TD of not less than 6 times, polyolefin molecule chains are sufficiently oriented to increase the tensile strength at break. The TD stretch ratio is preferably not more than 10 times from the viewpoint of preventing excessive thermal shrinkage around the melting point of polyolefin, and preferably not more than 8 times.

The area stretch ratio in the stretching step is preferably not less than 30 times from the viewpoint of making the ratio of tensile strength at break of the polyolefin microporous film isotropic, and preferably not more than 100 times in order to prevent increase in thermal shrinkage stress caused by excessive stretching. The area stretch ratio is more preferably 35 to 60, and still more preferably 40 to 55 times.

The stretch ratio at the time of stretching at a low stretch ratio in the heat setting step is preferably 1.5 to 3.0 in the MD of the film and/or in the TD of the film, more preferably 1.7 to 2.5 times, and still more preferably 1.8 to 2.2 times. Excessive stretching of the stretch ratio exceeding 3.0 times is not preferable because a possibility of breakage of the film may be increased.

The temperature at the time of stretching is preferably not less than 100°C in order to prevent breakage of the film caused by stretching, and preferably not more than 140°C from the viewpoint of preventing reduction in permeability of the polyolefin microporous film. The temperature at the time of stretching is more preferably 120 to 133°C, and still more preferably 125 to 133°C.

The temperature at the time of relaxation is preferably not less than 120°C from the viewpoint of reduction in the heat shrinkage rate, and preferably not more than 140°C from the viewpoint of preventing reduction in permeability of the polyolefin microporous film. The temperature is more preferably 125°C to 135°C, and still more preferably 128 to 135°C.

From the viewpoint of the TD tensile strength at break and the tensile elongation at break of the polyolefin microporous film, particularly, the TD heat setting stretch ratio (proportion of the film width after relaxation (after heat setting) to the initial film width (before heat setting)) is preferably not less than 1.3 times, more preferably not less than 1.4 times, and still more preferably not less than 1.5 times. The TD heat setting stretch ratio is preferably not more than 2.1 times from the viewpoint of safety as a battery separator, more preferably not more than 2.0 times, still more preferably not more than 1.8 times, and particularly preferably not more than 1.7 times.

The occurrence rate of raised edge roll is preferably not more than 3% from the viewpoint of yield, more preferably not more than 2%, and still more preferably not more than 1.0%.

The polyolefin microporous film according to the second embodiment, like that according to the first embodiment, is also suitable for a separator for electronic devices such as batteries and capacitors, micro filters, and the like, and is particularly suitable as a separator for lithium ion batteries.

Examples

Next, Examples and Comparative Examples will be given to describe the present embodiments more specifically, but the present embodiments will not be limited to the following Examples without departing from the scope of the gist. The respective physical properties in Examples were measured according to the following methods.

(1) Viscosity average molecular weight

The viscosity average molecular weights of polyethylene, polypropylene, and polyolefin microporous film each were measured at a measurement temperature of 135°C using decalin as a solvent. From the obtained viscosity $[\eta]$, the Mvs of polyethylene and the polyolefin microporous film each were calculated with the following formula.

$$[\eta] = 6.77 \times 10^{-4} \, Mv^{0.67} \text{ (equation of Chiang)}$$

The Mv of polypropylene was calculated with the following formula.

$$[\eta] = 1.10 \times 10^{-4} \, Mv^{0.80}$$

(2) Film thickness ($\mu$m)

A film thickness was measured at room temperature of 23°C using a micro thickness meter KBM (trademark) made by Toyo Seiki Seisaku-sho, Ltd.

(3) Porosity (%)

A sample of a 10 cm $\times$ 10 cm square was cut out from the microporous film. The volume (cm$^3$) and mass (g) thereof were determined. At a film density of 0.95 (g/cm$^3$), the porosity was calculated using the following formula.

$$Porosity = (1 - mass/volume/0.95) \times 100$$

(4) Air permeability (sec)

According to JIS P-8117, air permeability was measured by a Gurley type densometer G-B2 (trademark) made by Toyo Seiki Seisaku-sho, Ltd.

(5) Puncture strength (N)

Using a handy-type compression tester KES-G5 (trademark) made by Kato Tech Co., Ltd., the microporous film was fixed onto a predetermined position of a sample holder having an opening with a diameter of 11.3 mm. Next, a puncture test was conducted on a central portion of the fixed microporous film under conditions of a radius of curvature of a needle tip of 0.5 mm, a puncture rate of 2 mm/sec, an atmosphere of 25°C. Thereby, a raw value of puncture strength (N) was obtained as maximum puncture load.

(6) Tensile strength at break in MD and that in TD (MPa), tensile elongation at break (%), ratio of tensile strength at break, and ratio of tensile elongation at break

According to JIS K7127, using a tension tester Autograph AG-A type (trademark) made by Shimadzu Corporation, each of the physical properties was measured with respect to respective samples for MD measurement and for TD measurement (shape; 10 mm in width $\times$ 100 mm in length). The sample was used at a distance between chucks of 50 mm, a cellophane tape (made by Nitto Denko CS System Corporation, trade name: N.29) being applied to a single side of both ends (25 mm each) of the sample. In order to prevent slip of the sample during the test, a fluororubber having a thickness of 1 mm was attached to the inside of the chuck of the tension tester.
The tensile elongation at break (%) was determined by dividing the amount of elongation (mm) until the sample broke by the distance between the chucks (50 mm), and multiplying the divided value by 100. The tensile strength at break (MPa) was determined by dividing strength at the time of breakage by a cross-sectional area of the sample before the test.
Measurement was performed under the conditions of a temperature of 23 $\pm$ 2°C, a chuck pressure of 0.30 MPa, and a tensile rate of 200 mm/min.
The ratio of tensile strength at break was determined by dividing the MD tensile strength at break by the TD tensile strength at break. The ratio of the tensile elongation at break was determined by dividing the MD tensile elongation at break by the TD tensile elongation at break.

(7) Mean porosity size ($\mu$m)

It is known that a fluid within a capillary follows Knudsen flow when the mean free path of the fluid is larger than the porosity size of the capillary, and follows Poiseuille flow when the mean free path of the fluid is smaller than the porosity size of the capillary. Then, it was assumed that a flow of air at the time of measuring the air permeability of the microporous film follows the Knudsen flow, and a flow of water at the time of measuring a water permeability of the microporous film follows the Poiseuille flow.
In this case, the mean porosity size d ($\mu$m) and a bending proportion $\tau$ (dimensionless) of the microporous film were calculated using the following formulas, wherein a permeation rate constant of the air is $R_{gas}$ (m$^3$/(m$^2 \cdot$sec.Pa)), a

permeation rate constant of water is $R_{liq}$ ($m^3$/($m^2 \cdot sec \cdot Pa$)), a molecule rate of the air is $\nu$ (m/sec), a viscosity of water is $\eta$ (Pa·sec), standard pressure is Ps (= 101325 Pa), a porosity is $\varepsilon$ (%), and a film thickness is L ($\mu$m).

$$d = 2\nu \times (R_{liq}/R_{gas}) \times (16\eta/3P_s) \times 10^6$$

$$\tau = (d \times (\varepsilon/100) \times \nu/(3L \times P_s \times R_{gas}))^{1/2}$$

Here, $R_{gas}$ was determined using the following formula from the air permeability (sec) measured as mentioned above.

$$R_{gas} = 0.0001/(\text{air permeability} \times (6.424 \times 10^{-4}) \times (0.01276 \times 101325))$$

$R_{liq}$ was determined from the water permeability ($cm^3$/($cm^2 \cdot sec \cdot Pa$)) using the following formula.

$$R_{liq} = \text{water permeability}/100$$

The water permeability of the microporous film was determined as follows. The microporous film immersed in alcohol in advance was set in a liquid permeation cell having a diameter of 41 mm and made of stainless steel. Alcohol of the film was washed off with water. Subsequently, water was permeated at a differential pressure of approximately 50000 Pa, and the amount of water permeated when 120 seconds ($cm^3$) passed was measured. From the amount of water permeated, the amount of water permeated per unit time, unit pressure, and unit area was calculated, and this was used as the water permeability.

Moreover, $\nu$ was determined using the following formula from a gas constant R (= 8.314), the absolute temperature T (K), a circular constant $\pi$, and an average molecular weight M of air (= $2.896 \times 10^{-2}$ kg/mol) using the following formula.

$$\nu = ((8R \times T)/(\pi \times M))^{1/2}$$

(8) Shutdown temperature (°C), film breaking (meltdown) temperature (°C)

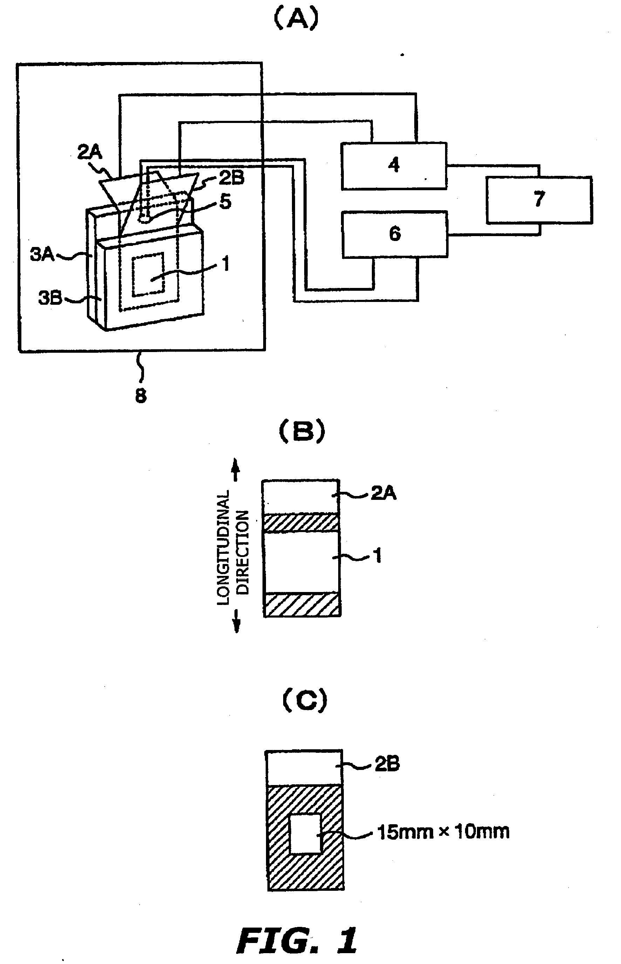

Figure 1 (A) shows a schematic view of a measuring apparatus used for measurement of a shutdown temperature. A microporous film 1 was sandwiched between nickel foils 2A and 2B having a thickness of 10 $\mu$m. The microporous film 1 sandwiched between the nickel foils 2A and 2B was further sandwiched between glass plates 3A and 3B. An electric resistance measuring apparatus 4 (LCR meter "AG-4311" (trademark) made by Ando Electric Co., Ltd.) was connected with the nickel foils 2A and 2B. A thermocouple 5 was connected with a thermometer 6. A data collector 7 was connected with the electric resistance apparatus 4 and the thermometer 6. An oven 8 heats the microporous film 1.

Described still in detail, as shown in Figure 1 (B), the microporous film 1 was layered on the nickel foil 2A, and fixed to the nickel foil 2A with a "Teflon (registered trademark)" tape (oblique-lined portion in the figure) in a longitudinal direction. The microporous film 1 was impregnated with a 1 mol/lit. of a lithium-borofluoride solution (solvent: propylene carbonate/ethylene carbonate/$\gamma$-butyl lactone = 1/1/2 (volume ratio)) as an electrolyte. As shown in Figure 1 (C), a "Teflon (registered trademark)" tape (oblique-lined portion in the figure) was attached to the nickel foil 2B. The nickel foil 2B was masked while a window portion (15 mm $\times$ 10 mm) was left in a center portion of the foil 2B.

The nickel foil 2A and the nickel foil 2B were layered so as to sandwich the microporous film 1 therebetween. Further, the two nickel foils were sandwiched between the glass plates 3A and 3B from both sides of the nickel foils. At this time, a position was aligned so that the window portion of the foil 2B and the microporous film 1 might face each other.

The two glass plates were fixed by clipping the glass plates with a commercially available double clip. The thermocouple 5 was fixed with a "Teflon (registered trademark)" tape so as to contact both of the glass plates 3A and 3B.

The temperature and electric resistance of the microporous film were continuously measured with such an apparatus while the microporous film was heated. The temperature was raised from 25°C to 200°C at a speed of 2°C/min, and the electric resistance value was measured at an alternating current (1 V and 1 kHz). The shutdown temperature was defined as a temperature when the electric resistance value of the microporous film reaches $10^3$ $\Omega$. Moreover, the

film breaking (meltdown) temperature was defined as a temperature when the electric resistance value is less than $10^3$ $\Omega$ again after shutdown.

(9) 130°C thermal shrinkage rate (%)

The polyolefin microporous film was cut into a 100 mm square so that respective sides of the square might be parallel to the MD and the TD, and left to stand for 1 hour within an oven whose temperature was adjusted at 130°C. Subsequently, the thermal shrinkage rate in the MD and that in the TD were calculated by measuring the dimensions of the microporous film in the MD and in the TD and the ratio and determining the ratio, expressed as percentage, of these dimensions to the dimensions before the polyolefin microporous film was left to stand within the oven.

(10) 130°C simple oven test

A non-charged lithium ion battery produced with the following procedures a to d was heated at a heating rate of 5°C/min. from 30°C to 130°C, and subsequently, held for 30 minutes at 130°C. After the battery was cooled to room temperature, the battery was disassembled, and an electrode plate laminated body was taken out. Then, it was checked visually whether an electrode was exposed in the outermost part of the electrode plate laminated body due to thermal shrinkage of a separator, and whether ends at a top and bottom of the electrode in a direction intersecting perpendicularly to a battery winding direction were exposed. The case where exposure of the electrode was recognized in both of the checks was evaluated as x, the case where exposure of the electrode was recognized in one of the checks was evaluated as △, and the case where no exposure of the electrode was recognized in both of the checks was evaluated as ○.

a. Preparation of nonaqueous electrolyte

$LiPF_6$ as a solute was dissolved in a mixed solvent of ethylene carbonate:ethyl methyl carbonate = 1:2 (volume ratio) so as to have a concentration of 1.0 mol/lit. Thus, a nonaqueous electrolyte was prepared.

b. Production of positive electrode

92.2% by mass of a lithium cobalt multiple oxide $LiCoO_2$ as an active material, 2.3% by mass of flake graphite and 2.3% by mass of acetylene black as a conducting agent, and 3.2% by mass of polyvinylidene fluoride (PVDF) as a binder were dispersed in N-methyl pyrrolidone (NMP) to prepare a slurry. This slurry was applied to the both sides of an aluminum foil having a thickness of 20 $\mu$m and serving as a positive electrode collector with a die coater, and dried for 3 minutes at 130°C. Subsequently, the coated aluminum foil was pressed and molded with a roll press machine. At this time, adjustment was made so that the amount of the active material for the positive electrode to be coated might be 250 g/m$^2$, and the bulk density of the active material might be 3.00 g/cm$^3$. The obtained molded body was cut in accordance with a battery width to obtain a strip positive electrode.

c. Production of negative electrode

96.9% by mass of artificial graphite as an active material, and 1.4% by mass of ammonium salt of carboxymethyl cellulose and 1.7% by mass of styrene butadiene copolymer latex as a binder were dispersed in purified water to prepare a slurry. This slurry was applied to the both sides of a copper foil having a thickness of 12 $\mu$m and serving as a negative electrode collector with a die coater, and dried for 3 minutes at 120°C. Subsequently, the coated copper foil was pressed and molded with a roll press machine. At this time, adjustment was made so that the amount of the active material for the negative electrode to be coated might be 106 g/m$^2$, and the bulk density of the active material might be 1.35 g/cm$^3$. The obtained molded body was cut in accordance with a battery width to obtain a strip negative electrode.

d. Assembly of battery

A strip polyolefin microporous film (separator) cut into a width of approximately 42 mm, the above-mentioned positive electrode, and the above-mentioned negative electrode were layered in order of the negative electrode, the separator, the positive electrode, and the separator. The layered body was spirally wound several times, and subsequently pressed into a plate-like form to produce an electrode plate laminated body. The electrode plate laminated body was accommodated in a container made of aluminum. A lead made of aluminum stretched from the positive electrode collector was connected to a wall of the container, and a lead made of nickel stretched from the negative electrode collector was connected to a terminal of a container lid, respectively. Further, the above-mentioned nonaqueous electrolyte was injected into the container and seal the container. Thus, a lithium ion battery was obtained.

(11) Occurrence rate of Raised edge Roll (%)

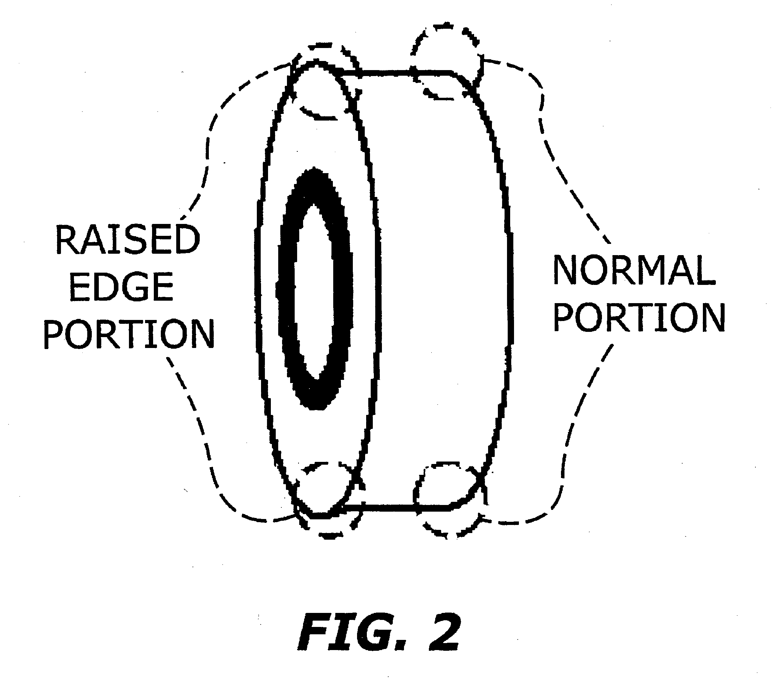

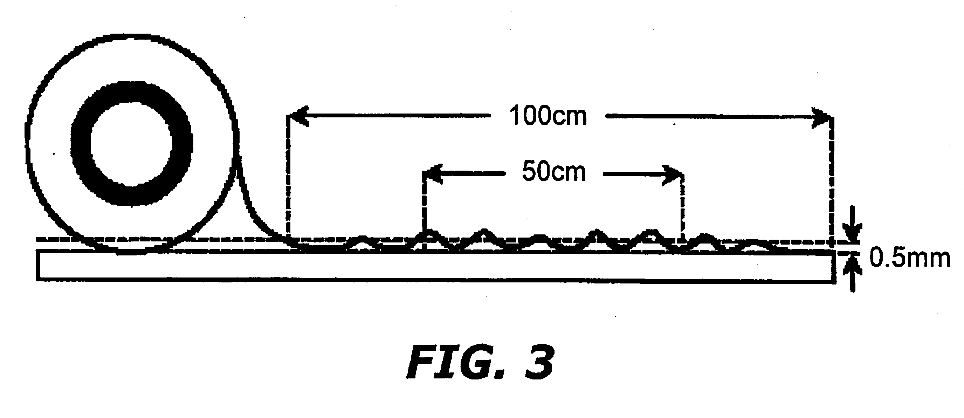

From a roll having a roll length of 500 m and obtained by slitting and winding the polyolefin microporous film as shown in Figure 2, 1 m of the film was unrolled and put on a horizontal board as shown in Figure 3. In the case where the roll has the raised edge, the outer circumference of the raised edge portion of the roll is larger (increased) than that of the normal portion thereof. For that reason, when the film is fed, the raised edge portion slacks. It was determined that the raised edge occurred in the case where at least one side of ends in the width direction of the film was not less than 0.5 mm away from the level surface of the board in a central 50-cm portion of the polyolefin microporous film fed as shown in Figure 3. The occurrence rate of raised edge roll is a value obtained by dividing the number of rolls having the raised edge by the total number of rolls, and multiplying the divided value by 100.

Next, Examples and Comparative Examples according to the first embodiment will be described.

[Example 1]

70% by mass of a high density polyethylene homopolymer having an Mv of 300,000 as PEa, 5% by mass of a polypropylene homopolymer having an Mv of 150,000 as PPa, and 25% by mass of a polypropylene homopolymer having an Mv of 400,000 as PPb were dry blended using a tumbler blender. To 99 parts by mass of the obtained polymer mixture, one part by mass of pentaerythrityl-tetrakis-[3-(3,5-di-t-butyl-4-hydroxyphenyl)propionate] was added as an antioxidant. Dry blending was again performed using a tumbler blender to obtain a mixture. An atmosphere in a feeder and that in a biaxial stretching machine were replaced with nitrogen. While the obtained mixture was supplied to a twin screw extruder with the feeder, liquid paraffin (kinematic viscosity of $7.59 \times 10^{-5}$ m$^2$/s at 37.78°C) was injected into an extruder cylinder with a plunger pump. Melt kneading was performed under the conditions of a preset temperature of 220°C, the number of rotation of a screw of 180 rpm, and an amount of discharge of 15 kg/h. Operating conditions of the feeder and the pump were adjusted so that a polymer concentration based to all the mixture extruded by melt kneading might be 50% by mass.

Subsequently, the molten kneaded product was extruded from a T-die, and cooled and solidified to obtain a 1100-$\mu$m sheet.

Next, this sheet was guided to a simultaneous biaxial tenter stretching machine, and biaxial stretching was performed. As stretching conditions, the MD stretch ratio was 7.0 times, the TD stretch ratio was 6.4 times, and a preset temperature was 118°C.

Subsequently, the sheet was guided to a tank of methyl ethyl ketone, and fully immersed in methyl ethyl ketone to extract and remove the liquid paraffin. Next, methyl ethyl ketone was dried and removed from the sheet. Further, the sheet was guided to a TD tenter, stretched at a low stretch ratio of 1.5 times and a temperature of 123°C, and heat set at a relaxation ratio of 0.87 times and a temperature of 128°C.

Next, a portion serving as a holding portion for the TD tenter was trimmed (removed by slitting). Further, the polyolefin microporous film was continuously wound around a paper core having an outer diameter of 152.6 mm and a thickness of 10 mm to obtain a mother roll having a roll length of 550 m. Table 1 shows the physical properties of the polyolefin microporous film.

Next, using a slitter (coaxial slitter) having two axes connected to a rotating driving part, in which slitted webs (microporous films) are alternately distributed to a plurality of roll cores fixed to the two axes to be simultaneously taken up around the roll cores, the microporous film was slit into a width of 50 mm, the microporous film being fed from the mother roll at a feeding tension per 1 mm of the mother roll of 0.16 N/mm and a take-up tension per 1 mm of the mother roll with respect to each axis of rotation of 0.08 N/mm. The 500-m microporous film was wound around a paper core having an inner diameter of 76.2 mm and a thickness of 10 mm. The slitting method was a shear cut method. This work was repeated to obtain a roll of a total of 500 windings, and the occurrence rate of raised edge roll was evaluated. In all of the following Examples and Comparative Examples, the microporous film was slit with the same method, and the occurrence rate of raised edge roll was evaluated in the same manner.

[Examples 2 to 13]

The polyolefin microporous film was produced in the same manner as that of Example 1 except that the conditions were changed into conditions described in Tables 1 and 2. Conditions not described in Tables 1 and 2 were the same as those in Example 1. The occurrence rate of raised edge roll was also evaluated in the same manner as in the case of Example 1. Tables 1 and 2 show the physical properties of the obtained polyolefin microporous films.

[Comparative Examples 1 to 7]

The polyolefin microporous film was produced in the same manner as that of Example 1 except that the conditions were changed into conditions described in Table 3. Conditions not described in Table 3 were the same as those in Example 1. The occurrence rate of raised edge roll was also evaluated in the same manner as in the case of Example 1. Table 3 shows the physical properties of the obtained polyolefin microporous films. The microporous film obtained in Comparative Example 7 had a large amount of particles in the film, and had inferior quality.

EP 2 261 276 B1

[Table 1]

| | Item | Unit | Example 1 | Example 2 | Example 3 | Example 4 | Example 5 | Example 6 | Example 7 |
|---|---|---|---|---|---|---|---|---|---|
| Raw material composition | PEa Mv | 10,000 | 30 | 30 | 30 | --- | 30 | 30 | 30 |
| | PEa Composition ratio | % by mass | 70 | 97 | 80 | --- | 86 | 43 | 66 |
| | PEb Mv | 10,000 | --- | --- | --- | 50 | --- | 70 | 130 |
| | PEb Composition ratio | % by mass | --- | --- | --- | 95 | --- | 43 | 20 |
| | PEc Mv | 10,000 | --- | --- | --- | --- | 10 | 10 | 10 |
| | PEc Composition ratio | % by mass | --- | --- | --- | --- | 5 | 5 | 5 |
| | PPa Kind | - | Homopolymer | Homopolymer | Homopolymer | Homopolymer | Homopolymer | Homopolymer | Homopolymer |
| | PPa Mv | 10,000 | 15 | 15 | 10 | 15 | 15 | 15 | 15 |
| | PPa Composition ratio | % by mass | 5 | 2 | 18 | 3 | 5 | 5 | 5 |
| | PPb Kind | - | Homopolymer | Homopolymer | Homopolymer | Homopolymer | Homopolymer | Homopolymer | Homopolymer |
| | PPb Mv | 10,000 | 40 | 40 | 50 | 40 | 40 | 40 | 40 |
| | PPb Composition ratio | % by mass | 25 | 1 | 2 | 2 | 4 | 4 | 4 |
| | Polymer concentration | % by mass | 50 | 50 | 50 | 35 | 35 | 37 | 37 |
| | Sheet thickness | μm | 1100 | 1100 | 1100 | 1750 | 1700 | 1550 | 1550 |
| Biaxial stretching conditions | Stretch ratio (MD) | Times | 7.0 | 7.0 | 7.0 | 7.0 | 7.0 | 7.0 | 7.0 |
| | Stretch ratio (TD) | Times | 6.4 | 6.4 | 6.4 | 6.4 | 6.4 | 6.4 | 6.4 |
| | Stretching temperature | °C | 118 | 120 | 118 | 122 | 119 | 122 | 120 |
| | Stretch ratio | Times | 1.5 | 1.5 | 1.5 | 1.5 | 1.5 | 1.4 | 1.4 |
| Heat setting conditions | Stretching temperature | °C | 123 | 123 | 122 | 123 | 118 | 123 | 122 |
| | Relaxation temperature | °C | 128 | 128 | 125 | 128 | 123 | 128 | 127 |
| | Relaxation ratio | Times | 0.87 | 0.87 | 0.87 | 0.87 | 0.73 | 0.82 | 0.86 |

(continued)

| Item | | Unit | Example 1 | Example 2 | Example 3 | Example 4 | Example 5 | Example 6 | Example 7 |
|---|---|---|---|---|---|---|---|---|---|
| Physical properties of polyolefin microporous film | Film thickness | μm | 16 | 16 | 16 | 16 | 20 | 16 | 16 |
| | Porosity | % | 45 | 45 | 47 | 43 | 48 | 37 | 41 |
| | Air permeability | sec | 400 | 210 | 300 | 250 | 250 | 380 | 250 |
| | Puncture strength | N | 3.5 | 4.0 | 3.6 | 5.0 | 4.5 | 3.8 | 4.2 |
| | Shutdown temperature | °C | 138 | 138 | 138 | 139 | 136 | 136 | 136 |
| | Meltdown temperature | °C | 200< | 190 | 200< | 200< | 200< | 200< | 200< |
| Occurrence rate of raised edge roll | | % | 0 | 0.2 | 0.4 | 0.6 | 0.2 | 0.2 | 0.2 |

[Table 2]

| Item | | | Unit | Example 8 | Example 9 | Example 10 | Example 11 | Example 12 | Example 13 |
|---|---|---|---|---|---|---|---|---|---|
| Raw material composition | PEa | Mv | 10,000 | --- | 30 | 30 | 30 | 30 | 30 |
| | | Composition ratio | % by mass | --- | 46 | 42 | 46 | 44 | 46 |
| | PEb | Mv | 10,000 | 50 | 70 | 70 | 70 | 90 | 70 |
| | | Composition ratio | % by mass | 86 | 45 | 43 | 47 | 44 | 46 |
| | PEc | Mv | 10,000 | 10 | --- | --- | --- | --- | --- |
| | | Composition ratio | % by mass | 5 | --- | --- | --- | --- | --- |
| | PPa | Kind | - | Homopolymer | Homopolymer | Homopolymer | Homopolymer | Homopolymer | Homopolymer |
| | | Mv | 10,000 | 15 | 15 | 15 | 15 | 10 | 25 |
| | | Composition ratio | % by mass | 5 | 5 | 12 | 3 | 4 | 4 |
| | PPb | Kind | - | Homopolymer | Homopolymer | Homopolymer | Homopolymer | Block polymer | Random polymer |
| | | Mv | 10,000 | 40 | 40 | 40 | 40 | 36 | 36 |
| | | Composition ratio | % by mass | 4 | 4 | 3 | 4 | 8 | 4 |
| | Polymer concentration | | % by mass | 35 | 37 | 37 | 37 | 37 | 37 |
| Sheet thickness | | | μm | 1750 | 1650 | 2000 | 2800 | 1650 | 1600 |
| Biaxial stretching conditions | Stretch ratio (MD) | | Times | 7.0 | 7.0 | 7.0 | 7.0 | 7.0 | 7.0 |
| | Stretch ratio (TD) | | Times | 6.4 | 6.4 | 6.4 | 6.4 | 6.4 | 6.4 |
| | Stretching temperature | | °C | 119 | 122 | 123 | 126 | 122 | 122 |

(continued)

| Item | | Unit | Example 8 | Example 9 | Example 10 | Example 11 | Example 12 | Example 13 |
|---|---|---|---|---|---|---|---|---|
| Heat setting conditions | Stretch ratio | Times | 1.5 | 1.5 | 1.5 | 1.5 | 1.5 | 1.5 |
| | Stretching temperature | °C | 118 | 123 | 123 | 120 | 123 | 123 |
| | Relaxation temperature | °C | 123 | 128 | 128 | 125 | 128 | 128 |
| | Relaxation ratio | Times | 0.73 | 0.87 | 0.87 | 0.87 | 0.87 | 0.87 |
| Physical properties of polyolefin microporous film | Film thickness | $\mu m$ | 20 | 16 | 20 | 30 | 16 | 16 |
| | Porosity | % | 48 | 43 | 43 | 46 | 42 | 41 |
| | Air permeability | sec | 250 | 290 | 300 | 420 | 330 | 330 |
| | Puncture strength | N | 5.6 | 5.5 | 6.5 | 6.5 | 5.0 | 5.2 |
| | Shutdown temperature | °C | 136 | 139 | 139 | 139 | 139 | 139 |
| | Meltdown temperature | °C | 200< | 200< | 200< | 200< | 200< | 200< |
| Occurrence rate of raised edge roll | | % | 0.6 | 0 | 0.4 | 0 | 0.2 | 0.2 |

[Table 3]

| | | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Raw material composition | PEa | Mv | 10,000 | 30 | --- | 30 | 30 | 30 | --- | 30 |
| | | Composition ratio | % by mass | 91 | --- | 86 | 43 | 46 | --- | 91 |
| | PEb | Mv | 10,000 | --- | 50 | --- | 70 | 70 | 50 | --- |
| | | Composition ratio | % by mass | --- | 91 | --- | 43 | 45 | 86 | --- |
| | PEc | Mv | 10,000 | --- | --- | 10 | 10 | --- | 10 | --- |
| | | Composition ratio | % by mass | --- | --- | 5 | 5 | --- | 5 | --- |
| | PPa | Kind | --- | --- | --- | --- | --- | --- | --- | Homopolymer |
| | | Mv | 10,000 | --- | --- | --- | --- | --- | --- | 15 |
| | | Composition ratio | % by mass | --- | --- | --- | --- | --- | --- | 9 |
| | PPb | Kind | - | Homopolymer | Homopolymer | Homopolymer | Homopolymer | Homopolymer | Homopolymer | --- |
| | | Mv | 10,000 | 40 | 40 | 50 | 40 | 40 | 40 | --- |
| | | Composition ratio | % by mass | 9 | 9 | 9 | 9 | 9 | 9 | --- |
| | Polymer concentration | | % by mass | 50 | 35 | 35 | 37 | 37 | 35 | 50 |
| Sheet thickness | | | μm | 1100 | 1750 | 1700 | 1550 | 1650 | 1750 | 1100 |
| Biaxial stretching conditions | Stretch ratio (MD) | | Times | 7.0 | 7.0 | 7.0 | 7.0 | 7.0 | 7.0 | 7.0 |
| | Stretch ratio (TD) | | Times | 6.4 | 6.4 | 6.4 | 6.4 | 6.4 | 6.4 | 6.4 |
| | Stretching temperature | | °C | 121 | 123 | 118 | 121 | 121 | 119 | 118 |

EP 2 261 276 B1

(continued)

| Item | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Heat setting conditions | Stretch ratio | Times | 1.5 | 1.5 | 1.5 | 1.4 | 1.5 | 1.5 | 1.5 |
| | Stretching temperature | °C | 123 | 123 | 118 | 123 | 123 | 118 | 122 |
| | Relaxation temperature | °C | 128 | 128 | 123 | 128 | 128 | 123 | 127 |
| | Relaxation ratio | Times | 0.87 | 0.87 | 0.73 | 0.82 | 0.87 | 0.73 | 0.87 |
| Physical properties of polyolefin microporous film | Film thickness | $\mu$m | 16 | 16 | 20 | 16 | 16 | 20 | 16 |
| | Porosity | % | 44 | 43 | 48 | 37 | 43 | 48 | 43 |
| | Air permeability | sec | 200 | 230 | 260 | 380 | 280 | 270 | 210 |
| | Puncture strength | N | 4 | 5 | 4.1 | 3.8 | 5.6 | 5.6 | 3.5 |
| | Fuse temperature | °C | 138 | 139 | 136 | 136 | 139 | 136 | 139 |
| | Meltdown temperature | °C | 200< | 200< | 200< | 200< | 200< | 200< | 180 |
| Occurrence rate of raised edge roll | | % | 1.0 | 1.6 | 1.0 | 1.0 | 1.0 | 2.0 | 3.0 |

As is clear from the results shown in Tables 1 to 3, these microporous films according to the present invention can provide a roll in which the occurrence of the raised edges is reduced.

Next, Examples and Comparative Examples according to the second embodiment will be described.

[Example 14]

91 % by mass of a high density polyethylene homopolymer having an Mv of 300,000 as PEa, 5% by mass of a polypropylene homopolymer having an Mv of 150,000 as PPa, and 4% by mass of a polypropylene homopolymer having an Mv of 400,000 as PPb were dry blended using a tumbler blender. To 99 parts by mass of the obtained polymer mixture, one part by mass of pentaerythrityl-tetrakis-[3-(3,5-di-t-butyl-4-hydroxyphenyl)propionate] was added as an antioxidant. Dry blending was again performed using a tumbler blender to obtain a mixture. An atmosphere in a feeder and that in a biaxial stretching machine were replaced with nitrogen. While the obtained mixture was supplied to a twin screw extruder with the feeder, liquid paraffin (kinematic viscosity of $7.59 \times 10^{-5}$ m$^2$/s at 37.78°C) was injected into an extruder cylinder with a plunger pump. Melt kneading was performed under the conditions of a preset temperature of 220°C, the number of rotation of a screw of 180 rpm, and an amount of discharge of 15 kg/h. Operating conditions of the feeder and the pump were adjusted so that a polymer concentration based to the whole mixture extruded by melt kneading might be 35% by mass.

Subsequently, the molten kneaded product was extruded from a T-die, and cooled and solidified to obtain a 1350-$\mu$m sheet.

Next, this sheet was guided to a simultaneous biaxial tenter stretching machine, and biaxial stretching was performed. As stretching conditions, the MD stretch ratio was 7.0 times, the TD stretch ratio was 6.4 times, and a preset temperature was 122°C.

Subsequently, the sheet was guided to a tank of methyl ethyl ketone, and fully immersed in methyl ethyl ketone to extract and remove the liquid paraffin. Next, methyl ethyl ketone was dried and removed from the sheet. Further, the sheet was guided to a TD tenter, stretched at a low stretch ratio of 1.85 times and a temperature of 130°C, and heat set at a relaxation ratio of 0.81 times and a temperature of 132°C. As a result, the TD stretch ratio was 9.6 times.

Next, a portion serving as a holding portion for the TD tenter was trimmed. Further, the polyolefin microporous film was continuously wound around a paper core having an outer diameter of 152.6 mm and a thickness of 10 mm to obtain a mother roll having a roll length of 550 m. Table 4 shows the physical properties of the polyolefin microporous film.

Next, using a slitter (coaxial slitter) of a type that alternately distributes slit webs to a plurality of roll cores fixed to two axes having a rotating driving part, and takes up the webs around the roll cores in batch, the microporous film was slit into a width of 50 mm, the microporous film being fed from the mother roll at a feeding tension per 1 mm of the mother roll of 0.10 N/mm and a take-up tension per 1 mm of the mother roll with respect to each axis of rotation of 0.05 N/mm. The 500-m microporous film was wound around a paper core having an inner diameter of 76.2 mm and a thickness of 10 mm. The slitting method was a shear cut method. This work was repeated to obtain a roll of a total of 500 windings, and the occurrence rate of raised edge roll was evaluated. In all of Examples given below, the microporous film was slit with the same method, and the occurrence rate of raised edge roll was evaluated in the same manner.

[Examples 15 to 32]

The polyolefin microporous film was produced in the same manner as that of Example 14 except that the conditions were changed into conditions described in Tables 4 to 6. Conditions not described in Tables 4 to 6 were the same as those in Example 14. The occurrence rate of raised edge roll was also evaluated in the same manner as in the case of Example 14. Tables 4 to 6 show the physical properties of the obtained polyolefin microporous films.

[Examples 33 to 40, Comparative Examples 8 to 10]

The polyolefin microporous film was produced in the same manner as that of Example 14 except that the conditions were changed into conditions described in Tables 7 and 8. Conditions not described in Tables 7 and 8 were the same as those in Example 14. The occurrence rate of raised edge roll was also evaluated in the same manner as in the case of Example 14. Tables 7 and 8 show the physical properties of the obtained polyolefin microporous films.

[Table 4]

| | | Item | Unit | Example 14 | Example 15 | Example 16 | Example 17 | Example 18 | Example 19 | Example 20 |
|---|---|---|---|---|---|---|---|---|---|---|
| Raw material composition | PEa | Mv | 10,000 | 30 | --- | 30 | 30 | 30 | --- | 30 |
| | | Composition ratio | % by mass | 91 | --- | 86 | 43 | 66 | --- | 46 |
| | PEb | Mv | 10,000 | --- | 50 | --- | 70 | 130 | 50 | 70 |
| | | Composition ratio | % by mass | --- | 91 | --- | 43 | 20 | 86 | 45 |
| | PEc | Mv | 10,000 | --- | --- | 10 | 10 | 10 | 10 | --- |
| | | Composition ratio | % by mass | --- | --- | 5 | 5 | 5 | 5 | --- |
| | PPa | Kind | - | Homopolymer | Homopolymer | Homopolymer | Homopolymer | Homopolymer | Homopolymer | Homopolymer |
| | | Mv | 10,000 | 15 | 15 | 15 | 15 | 15 | 15 | 15 |
| | | Composition ratio | % by mass | 5 | 5 | 5 | 5 | 5 | 5 | 5 |
| | PPb | Kind | - | Homopolymer | Homopolymer | Homopolymer | Homopolymer | Homopolymer | Homo-polymer | Homopolymer |
| | | Mv | 10,000 | 40 | 40 | 40 | 40 | 40 | 40 | 40 |
| | | Composition ratio | % by mass | 4 | 4 | 4 | 4 | 4 | 4 | 4 |
| | Polymer | concentration | % by mass | 35 | 35 | 35 | 35 | 32 | 32 | 35 |
| Sheet thickness | | | μm | 1350 | 1350 | 1350 | 1350 | 1400 | 1400 | 1050 |
| Biaxial stretching conditions | Stretch ratio (MD) | | Times | 7.0 | 7.0 | 7.0 | 7.0 | 7.0 | 7.0 | 7.0 |
| | Stretch ratio (TD) | | Times | 6.4 | 6.4 | 6.4 | 6.4 | 6.4 | 6.4 | 6.4 |
| | Stretching temperature | | °C | 122 | 125 | 121 | 122 | 123 | 124 | 123 |
| Heat setting conditions | Stretch ratio (TD) | | Times | 1.85 | 1.85 | 1.85 | 1.85 | 1.85 | 1.85 | 1.85 |
| | Stretching temperature | | °C | 130 | 130 | 128 | 129 | 129 | 129 | 130 |
| | Relaxation temperature | | °C | 132 | 132 | 130 | 130 | 130 | 130 | 132 |
| | Relaxation ratio (TD) | | Times | 0.81 | 0.81 | 0.81 | 0.81 | 0.81 | 0.81 | 0.81 |

EP 2 261 276 B1

26

| Item | | Unit | Example 14 | Example 15 | Example 16 | Example 17 | Example 18 | Example 19 | Example 20 |
|---|---|---|---|---|---|---|---|---|---|
| TD total stretch ratio | | Times | 9.6 | 9.6 | 9.6 | 9.6 | 9.6 | 9.6 | 9.6 |
| Physical properties of polyolefin microporous film | Film thickness | μm | 9 | 9 | 9 | 9 | 9 | 9 | 7 |
| | Porosity | % | 32 | 32 | 32 | 33 | 33 | 33 | 32 |
| | Air permeability | sec | 250 | 270 | 270 | 250 | 290 | 290 | 230 |
| | Puncture strength | N | 2.5 | 3.0 | 2.5 | 3.2 | 3.5 | 3.8 | 2.5 |
| | Mean porosity size | μm | 0.075 | 0.070 | 0.065 | 0.070 | 0.065 | 0.065 | 0.070 |
| | MD tensile strength at break | MPa | 150 | 150 | 160 | 160 | 170 | 180 | 160 |
| | MD tensile elongation at break | % | 70 | 80 | 70 | 70 | 60 | 50 | 70 |
| | Physical TD tensile strength at break | MPa | 150 | 150 | 160 | 160 | 170 | 170 | 160 |
| | TD tensile elongation at break | % | 70 | 80 | 70 | 70 | 60 | 70 | 70 |
| | MD/TD ratio of strength at break | - | 1.0 | 1.0 | 1.0 | 1.0 | 1.0 | 1.1 | 1.0 |
| | MD/TD ratio of elongation at break | - | 1.0 | 1.0 | 1.0 | 1.0 | 1.0 | 0.7 | 1.0 |
| | 130°C thermal shrinkage rate (MD) | % | 15 | 15 | 16 | 16 | 16 | 16 | 15 |
| | 130°C thermal shrinkage rate (TD) | % | 13 | 13 | 16 | 15 | 15 | 15 | 13 |
| | Shutdown temperature | °C | 138 | 140 | 136 | 136 | 136 | 136 | 139 |
| | Meltdown temperature | °C | 200< | 200< | 200< | 200< | 200< | 200< | 200< |
| 130°C simple oven test | | - | ○ | ○ | ○ | ○ | ○ | ○ | ○ |
| Occurrence rate of raised edge roll | | % | 0.6 | 1.6 | 1.0 | 1.0 | 1.0 | 2.0 | 0.2 |

[Table 5]

| Item | | | Unit | Example 21 | Example 22 | Example 23 | Example 24 | Example 25 | Example 26 |
|---|---|---|---|---|---|---|---|---|---|
| Raw material composition | PEa | Mv | 10,000 | 30 | 30 | 30 | 30 | 30 | 30 |
| | | Composition ratio | % by mass | 49 | 48 | 46 | 42 | 46 | 59 |
| | PEb | Mv | 10,000 | 70 | 70 | 70 | 130 | 70 | 70 |
| | | Composition ratio | % by mass | 48 | 47 | 47 | 43 | 47 | 31 |
| | PEc | Mv | 10,000 | --- | --- | --- | --- | --- | --- |
| | | Composition ratio | % by mass | --- | --- | --- | --- | --- | --- |
| | PPa | Kind | - | Homo-polymer | Homo-polymer | Homo-polymer | Homo-polymer | Homo-polymer | Homo-polymer |
| | | Mv | 1 10,000 | 15 | 15 | 15 | 15 | 15 | 15 |
| | | Composition ratio | % by mass | 2 | 3 | 3 | 5 | 3 | 3 |
| | PPb | Kind | - | Homopolymer | Homopolymer | Homopolymer | Homopolymer | Homopolymer | Homopolymer |
| | | Mv | 10,000 | 40 | 40 | 40 | 40 | 40 | 40 |
| | | Composition ratio | % by mass | 1 | 2 | 4 | 10 | 4 | 7 |
| | Polymer concentration | | % by mass | 35 | 35 | 35 | 35 | 32 | 35 |
| Sheet thickness | | | μm | 1350 | 1350 | 1350 | 1800 | 1900 | 980 |
| Biaxial stretching conditions | Stretch ratio (MD) | | Times | 7.0 | 7.0 | 7.0 | 7.0 | 7.0 | 7.0 |
| | Stretch ratio (TD) | | Times | 6.4 | 6.4 | 6.4 | 6.4 | 6.4 | 6 |
| | Stretching temperature | | °C | 123 | 123 | 123 | 124 | 123 | 123 |

EP 2 261 276 B1

28

| Item | | Unit | Example 21 | Example 22 | Example 23 | Example 24 | Example 25 | Example 26 |
|---|---|---|---|---|---|---|---|---|
| Heat setting conditions | Stretch ratio (TD) | Times | 1.85 | 1.85 | 1.8 | 1.75 | 1.9 | 1.8 |
| | Stretching temperature | °C | 130 | 130 | 130 | 128 | 127 | 130 |
| | Relaxation temperature | °C | 132 | 132 | 132 | 131 | 132 | 132 |
| | Relaxation ratio (TD) | Times | 0.84 | 0.84 | 0.83 | 0.83 | 0.87 | 0.83 |
| TD total stretch ratio | | Times | 9.9 | 9.9 | 9.6 | 9.3 | 10.6 | 9 |

(continued)

| Item | | Unit | Example 21 | Example 22 | Example 23 | Example 24 | Example 25 | Example 26 |
|---|---|---|---|---|---|---|---|---|
| Physical properties of polyolefin microporous film | Film thickness | μm | 9 | 9 | 9 | 12 | 12 | 7 |
| | Porosity | % | 33 | 33 | 33 | 36 | 42 | 33 |
| | Air permeability | sec | 240 | 250 | 230 | 260 | 120 | 220 |
| | Puncture strength | N | 3.0 | 2.9 | 3.2 | 3.9 | 3.1 | 2.1 |
| | Mean porosity size | μm | 0.070 | 0.070 | 0.065 | 0.060 | 0.075 | 0.060 |
| | MD tensile strength at break | MPa | 150 | 150 | 200 | 160 | 105 | 150 |
| | MD tensile elongation at break | % | 80 | 80 | 50 | 80 | 70 | 80 |
| | TD tensile strength at break | MPa | 150 | 150 | 170 | 160 | 105 | 120 |
| | TD tensile elongation at break | % | 80 | 80 | 80 | 80 | 80 | 90 |
| | MD/TD ratio of strength at break | - | 1.0 | 1.0 | 1.2 | 1.0 | 1.0 | 1.3 |
| | MD/TD ratio of elongation at break | - | 1.0 | 1.0 | 0.6 | 1.0 | 0.9 | 0.9 |
| | 130°C thermal shrinkage rate (MD) | % | 15 | 15 | 15 | 15 | 16 | 14 |
| | 130°C thermal shrinkage rate (TD) | % | 14 | 14 | 13 | 13 | 19 | 12 |
| | Shutdown temperature | °C | 139 | 139 | 139 | 140 | 139 | 139 |
| | Meltdown temperature | °C | 190 | 200< | 200< | 200< | 200< | 200< |
| 130°C simple oven test | | - | ○ | ○ | ○ | ○ | ○ | ○ |
| Occurrence rate of raised edge roll | | % | 1.2 | 0.8 | 1.0 | 0.2 | 1.0 | 2.2 |

[Table 6]

| Item | | | Unit | Example 27 | Example 28 | Example 29 | Example 30 | Example 31 | Example 32 |
|---|---|---|---|---|---|---|---|---|---|
| Raw material composition | PEa | Mv | 10,000 | 30 | 30 | 30 | 30 | 30 | 30 |
| | | Composition ratio | % by mass | 46 | 46 | 46 | 40 | 46 | 46 |
| | PEb | Mv | 10,000 | 70 | 70 | 70 | 70 | 90 | 70 |
| | | Composition ratio | % by mass | 45 | 45 | 45 | 30 | 46 | 46 |
| | PEc | Mv | 10,000 | - | - | - | - | - | - |
| | | Composition ratio | % by mass | - | - | - | - | - | - |
| | PPa | Kind | - | Homopolymer | Homopolymer | Homopolymer | Homopolymer | Homopolymer | Homopolymer |
| | | Mv | 10,000 | 15 | 15 | 15 | 15 | 10 | 25 |
| | | Composition ratio | % by mass | 5 | 5 | 5 | 23 | 4 | 4 |
| | PPb | Kind | - | Homopolymer | Homopolymer | Homopolymer | Homopolymer | Block polymer | Random polymer |
| | | Mv | 10,000 | 40 | 40 | 40 | 50 | 36 | 36 |
| | | Composition ratio | % by mass | 4 | 4 | 4 | 7 | 4 | 4 |
| | Polymer concentration | | % by mass | 35 | 35 | 35 | 35 | 35 | 35 |
| Sheet thickness | | | μm | 1350 | 820 | 1400 | 1400 | 1350 | 1050 |
| Biaxial stretching conditions | Stretch ratio (MD) | | Times | 7.0 | 7.0 | 7.0 | 7.0 | 7.0 | 7.0 |
| | Stretch ratio (TD) | | Times | 6.4 | 7.0 | 6.4 | 6.4 | 6.4 | 6.4 |
| | Stretching temperature | | °C | 124 | 124 | 126 | 122 | 123 | 123 |

(continued)

| Item | | Unit | Example 27 | Example 28 | Example 29 | Example 30 | Example 31 | Example 32 |
|---|---|---|---|---|---|---|---|---|
| Heat setting conditions | Stretch ratio (TD) | Times | 1.8 | 1.8 | 1.85 | 1.8 | 1.8 | 1.8 |
| | Stretching temperature | °C | 130 | 129 | 130 | 125 | 130 | 125 |
| | Relaxation temperature | °C | 132 | 131 | 132 | 128 | 132 | 132 |
| | Relaxation ratio (TD) | Times | 0.83 | 0.83 | 0.81 | 0.83 | 0.83 | 0.83 |
| TD total stretch ratio | | Times | 9.6 | 10.5 | 9.6 | 9.6 | 9.6 | 9.6 |

(continued)

| Item | | Unit | Example 27 | Example 28 | Example 29 | Example 30 | Example 31 | Example 32 |
|---|---|---|---|---|---|---|---|---|
| Physical properties of polyolefin microporous film | Film thickness | μm | 7 | 5 | 7 | 9 | 9 | 7 |
| | Porosity | % | 33 | 35 | 33 | 44 | 33 | 38 |
| | Air permeability | sec | 200 | 120 | 190 | 80 | 210 | 100 |
| | Puncture strength | N | 1.9 | 2.0 | 1.6 | 2.0 | 2.9 | 2.1 |
| | Mean porosity size | μm | 0.070 | 0.070 | 0.075 | 0.060 | 0.075 | 0.060 |
| | MD tensile strength at break | MPa | 130 | 200 | 120 | 130 | 150 | 160 |
| | MD tensile elongation at break | % | 90 | 50 | 100 | 80 | 70 | 80 |
| | TD tensile strength at break | MPa | 130 | 180 | 110 | 130 | 150 | 170 |
| | TD tensile elongation at break | % | 100 | 60 | 110 | 70 | 70 | 70 |
| | MD/TD ratio of strength at break | - | 1.0 | 1.1 | 1.1 | 1.0 | 1.0 | 0.9 |
| | MD/TD ratio of elongation at break | - | 0.9 | 0.8 | 0.9 | 1.1 | 1.0 | 1.1 |
| | 130°C thermal shrinkage rate (MD) | % | 14 | 16 | 15 | 19 | 15 | 19 |
| | 130°C thermal shrinkage rate (TD) | % | 13 | 15 | 13 | 21 | 13 | 17 |
| | Shutdown temperature | °C | 139 | 139 | 139 | 139 | 139 | 139 |
| | Meltdown temperature | °C | 200< | 200< | 200< | 200< | 200< | 200< |
| 130°C simple oven test | | - | ○ | ○ | ○ | △ | ○ | ○ |
| Occurrence rate of raised edge roll | | % | 1.6 | 0.6 | 2.0 | 2.0 | 0.6 | 1.0 |

[Table 7]

| Item | | | Unit | Example 33 | Example 34 | Example 35 | Example 36 | Example 37 | Example 38 |
|---|---|---|---|---|---|---|---|---|---|
| Raw material composition | PEa | Mv | 10,000 | 30 | 30 | 30 | 30 | 30 | 30 |
| | | Composition ratio | % by mass | 91 | 91 | 91 | 91 | 91 | 46 |
| | PEb | Mv | 10,000 | - | - | - | - | - | 70 |
| | | Composition ratio | % by mass | - | - | - | - | - | 45 |
| | PEc | Mv | 10,000 | - | - | - | - | - | - |
| | | Composition ratio | % by mass | - | - | - | - | - | - |
| | PPa | kind | - | Homopolymer | Homopolymer | Homopolymer | Homopolymer | Homopolymer | Homopolymer |
| | | Mv | 10,000 | 15 | 15 | 15 | 15 | 15 | 15 |
| | | Composition ratio | % by mass | 5 | 5 | 5 | 5 | 5 | 5 |
| | PPb | Kind | - | Homopolymer | Homopolymer | Homopolymer | Homopolymer | Homopolymer | Homopolymer |
| | | Mv | 10,000 | 40 | 40 | 40 | 40 | 40 | 40 |
| | | Composition ratio | % by mass | 4 | 4 | 4 | 4 | 4 | 4 |
| | Polymer concentration | | % by mass | 35 | 35 | 35 | 35 | 35 | 35 |
| Sheet thickness | | | μm | 500 | 600 | 1000 | 650 | 850 | 700 |
| Biaxial stretching conditions | Stretch ratio (MD) | | Times | 5.0 | 5.0 | 7.0 | 6.5 | 7.0 | 7.0 |
| | Stretch ratio (TD) | | Times | 5.0 | 5.0 | 6.0 | 6.5 | 6.4 | 6.4 |
| | Stretching temperature | | °C | 116 | 116 | 122 | 122 | 123 | 123 |
| Heat setting conditions | Stretch ratio (TD) | | Times | 1.4 | 1.4 | 2.2 | 1.3 | 1.3 | 1.3 |
| | Stretching temperature | | °C | 120 | 122 | 124 | 123 | 123 | 123 |
| | Relaxation temperature | | °C | 123 | 125 | 126 | 128 | 128 | 128 |
| | Relaxation ratio (TD) | | Times | 0.79 | 0.93 | 0.91 | 0.79 | 0.79 | 0.79 |

EP 2 261 276 B1

34

(continued)

| Item | | Unit | Example 33 | Example 34 | Example 35 | Example 36 | Example 37 | Example 38 |
|---|---|---|---|---|---|---|---|---|
| TD total stretch ratio | | Times | 5.5 | 6.5 | 12 | 6.7 | 6.6 | 6.6 |
| Physical properties of polyolefin microporous film | Film thickness | $\mu$m | 9 | 9 | 7 | 7 | 9 | 7 |
| | Porosity | % | 40 | 42 | 37 | 40 | 40 | 40 |
| | Air permeability | sec | 200 | 160 | 120 | 150 | 200 | 160 |
| | Puncture strength | N | 2.4 | 2.6 | 2.3 | 2.1 | 2.5 | 2.3 |
| | Mean porosity size | $\mu$m | 0.050 | 60.000 | 0.080 | 0.055 | 0.055 | 0.055 |
| | MD tensile strength at break | MPa | 140 | 140 | 160 | 160 | 200 | 200 |
| | MD tensile elongation at break | % | 130 | 120 | 50 | 50 | 50 | 50 |
| | TD tensile strength at break | MPa | 140 | 150 | 220 | 100 | 100 | 100 |
| | TD tensile elongation at break | % | 170 | 140 | 30 | 110 | 120 | 120 |
| | MD/TD ratio of strength at break | - | 1.0 | 0.9 | 0.7 | 1.6 | 2.0 | 2.0 |
| | MD/TD ratio of elongation at break | - | 0.8 | 0.9 | 1.7 | 0.5 | 0.4 | 0.4 |
| | 130°C thermal shrinkage rate (MD) | of | 27 | 27 | 20 | 21 | 21 | 21 |
| | 130°C thermal shrinkage rate (TD) | % | 25 | 26 | 30 | 24 | 24 | 24 |
| | Shutdown temperature | °C | 139 | 139 | 140 | 139 | 139 | 139 |
| | Meltdown temperature | °C | 200< | 200< | 200< | 200< | 200< | 200< |
| 130°C simple oven test | | - | × | × | × | × | × | × |
| Occurrence rate of raised edge roll | | % | 6.0 | 5.0 | 4.0 | 6.0 | 6.0 | 6.6 |

[Table 8]

| Item | | | Unit | Example 39 | Example 40 | Comparative Example 8 | Comparative Example 9 | Comparative Example 10 |
|---|---|---|---|---|---|---|---|---|
| Raw material composition | PEa | Mv | 10,000 | 30 | 30 | 30 | 30 | 30 |
| | | Composition ratio | % by mass | 46 | 46 | 46 | 46 | 46 |
| | PEb | Mv | 10,000 | 70 | 70 | 70 | 70 | 70 |
| | | Composition ratio | % by mass | 45 | 45 | 45 | 45 | 45 |
| | PEc | Mv | 10,000 | - | - | - | - | - |
| | | Composition ratio | % by mass | - | - | - | - | - |
| | PPa | Kind | - | Homopolymer | Homopolymer | - | - | - |
| | | Mv | 10,000 | 15 | 15 | - | - | - |
| | | Composition ratio | % by mass | 5 | 5 | - | - | - |
| | PPb | Kind | - | Homopolymer | Homopolymer | Homopolymer | Homopolymer | Homopolymer |
| | | Mv | 10,000 | 40 | 40 | 40 | 40 | 40 |
| | | Composition ratio | % by mass | 4 | 4 | 9 | 9 | 9 |
| | Polymer concentration | | % by mass | 35 | 35 | 35 | 35 | 35 |
| Sheet thickness | | | μm | 1450 | 1100 | 700 | 500 | 1000 |
| Biaxial stretching conditions | Stretch ratio (MD) | | Times | 7.0 | 7.0 | 7.0 | 5.0 | 7.0 |
| | Stretch ratio (TD) | | Times | 6.4 | 6.4 | 6.4 | 5.0 | 6.0 |
| | Stretching temperature | | °C | 124 | 124 | 123 | 116 | 122 |

EP 2 261 276 B1

36

(continued)

| Item | | Unit | Example 39 | Example 40 | Comparative Example 8 | Comparative Example 9 | Comparative Example 10 |
|---|---|---|---|---|---|---|---|
| Heat setting conditions | Stretch ratio (TD) | Times | 1.3 | 1.3 | 1.3 | 1.4 | 2.2 |
| | Stretching temperature | °C | 123 | 123 | 123 | 120 | 124 |
| | Relaxation temperature | °C | 128 | 128 | 128 | 123 | 126 |
| | Relaxation ratio (TD) | Times | 0.79 | 0.79 | 0.79 | 0.79 | 0.91 |
| TD total stretch ratio | | Times | 6.6 | 6.6 | 6.6 | 5.5 | 12.0 |

(continued)

| Item | | Unit | Example 39 | Example 40 | Comparative Example 8 | Comparative Example 9 | Comparative Example 10 |
|---|---|---|---|---|---|---|---|
| Physical properties of polyolefin microporous film | Film thickness | μm | 16 | 12 | 7 | 9 | 7 |
| | Porosity | % | 40 | 40 | 40 | 40 | 37 |
| | Air permeability | sec | 340 | 260 | 150 | 200 | 120 |
| | Puncture strength | N | 5.3 | 3.8 | 2.7 | 3.0 | 2.6 |
| | Mean porosity size | μm | 0.055 | 0.055 | 0.055 | 0.050 | 0.080 |
| | MD tensile strength at break | MPa | 200 | 200 | 200 | 140 | 160 |
| | MD tensile elongation at break | % | 50 | 50 | 50 | 130 | 50 |
| | TD tensile strength at break | MPa | 100 | 100 | 100 | 140 | 220 |
| | TD tensile elongation at break | % | 120 | 120 | 120 | 170 | 30 |
| | MD/TD ratio of strength at break | - | 2.0 | 2.0 | 2.0 | 1.0 | 0.7 |
| | MD/TD ratio of elongation at break | - | 0.4 | 0.4 | 0.4 | 0.8 | 1.7 |
| | 130°C thermal shrinkage rate (MD) | % | 21 | 21 | 21 | 27 | 20 |
| | 130°C thermal shrinkage rate (TD) | % | 24 | 24 | 24 | 25 | 30 |
| | Shutdown temperature | °C | 139 | 139 | 139 | 139 | 140 |
| | Meltdown temperature | °C | 200< | 200< | 200< | 200< | 200< |
| 130°C simple oven test | | - | × | × | × | × | × |
| Occurrence rate of raised edge roll | | % | 0.2 | 4.0 | 10.0 | 8.0 | 8.0 |

As is clear from the results shown in Tables 4 to 8, these microporous films according to the present invention are thin films having a thickness of not more than 14 $\mu$m, and have the occurrence of the raised edges extremely higher than in the case where the film thickness exceeds 14 $\mu$m. Nevertheless, these microporous films can provide a roll in which the occurrence of the raised edges is reduced. The microporous film according to the present invention also has high safety. Of these microporous films according to the present invention, particularly, the microporous film having 10 to 110% of the TD tensile elongation at break and a ratio of tensile strength at break of 0.8 to 1.3 can provide a roll in which the occurrence of the raised edge is reduced remarkably.

[Examples 41 to 47, Comparative Examples 11 to 13]

The polyolefin microporous film was produced in the same manner as that of Example 1 except that the conditions were changed into conditions described in Tables 9 and 10. Conditions not described in Tables 9 and 10 were the same as those in Example 1. The occurrence rate of raised edge roll was also evaluated in the same manner as in the case of Example 1. Tables 9 and 10 show the physical properties of the obtained polyolefin microporous films. The microporous film obtained in Comparative Example 13 had a large amount of particles in the film, and had inferior quality.

[Table 9]

| | Item | | Unit | Example 41 | Example 42 | Example 43 | Example 44 | Example 45 | Example 46 | Example 47 |
|---|---|---|---|---|---|---|---|---|---|---|
| Raw material composition | PEa | Mv | 10,000 | 30 | 30 | 30 | 30 | 30 | 30 | 30 |
| | | Composition ratio | % by mass | 46 | 46 | 46 | 80 | 80 | 42 | 42 |
| | PEb | Mv | 10,000 | 46 | 46 | 46 | - | - | 46 | 46 |
| | | Composition ratio | % by mass | 45 | 45 | 45 | - | - | 43 | 43 |
| | PEc | Mv | 10,000 | - | - | - | - | - | - | - |
| | | Composition ratio | % by mass | - | - | - | - | - | - | - |
| | PPa | Kind | - | Homopolymer | Homopolymer | Homopolymer | Homopolymer | Homopolymer | Homopolymer | Homopolymer |
| | | Mv | 10,000 | 10 | 10 | 5 | 10 | 10 | 20 | 25 |
| | | Composition ratio | % by mass | 5 | 5 | 5 | 6 | 14 | 5 | 5 |
| | PPb | Kind | - | Homopolymer | Homopolymer | Homopolymer | Homopolymer | Homopolymer | Homopolymer | Homopolymer |
| | | Mv | 10,000 | 60 | 30 | 40 | 50 | 50 | 60 | 60 |
| | | Composition ratio | % by mass | 4 | 4 | 4 | 14 | 6 | 10 | 10 |
| | Polymer concentration | | % by mass | 37 | 37 | 37 | 50 | 50 | 35 | 35 |
| Sheet thickness | | | μm | 1650 | 1650 | 1650 | 1100 | 1100 | 1700 | 1700 |
| Biaxial stretching conditions | Stretch ratio (MD) | | Times | 7.0 | 7.0 | 7.0 | 7.0 | 7.0 | 7.0 | 7.0 |
| | Stretch ratio (TD) | | Times | 6.4 | 6.4 | 6.4 | 6.4 | 6.4 | 6.4 | 6.4 |
| | Stretching temperature | | °C | 123 | 122 | 122 | 118 | 118 | 119 | 119 |
| Heat setting conditions | Stretch ratio | | Times | 1.5 | 1.5 | 1.5 | 1.5 | 1.5 | 1.5 | 1.5 |
| | Stretching temperature | | °C | 121 | 121 | 121 | 122 | 122 | 119 | 119 |
| | Relaxation temperature | | °C | 124 | 124 | 124 | 125 | 125 | 123 | 123 |
| | Relaxation ratio | | Times | 0.87 | 0.87 | 0.87 | 0.87 | 0.87 | 0.73 | 0.73 |

EP 2 261 276 B1

(continued)

| Item | | Unit | Example 41 | Example 42 | Example 43 | Example 44 | Example 45 | Example 46 | Example 47 |
|---|---|---|---|---|---|---|---|---|---|
| Physical properties of polyolefin microporous film | Film thickness | μm | 16 | 16 | 16 | 16 | 16 | 20 | 20 |
| | Porosity | % | 43 | 41 | 40 | 47 | 45 | 45 | 45 |
| | Air permeability | sec | 330 | 360 | 340 | 280 | 310 | 310 | 300 |
| | Puncture strength | N | 5.0 | 5.0 | 5.0 | 3.8 | 3.8 | 5.9 | 6.0 |
| | Shutdown temperature | °C | 139 | 139 | 139 | 139 | 139 | 139 | 139 |
| | Meltdown temperature | °C | 200< | 200< | 200< | 200< | 200< | 200< | 200< |
| Occurrence rate of raised edge roll | | % | 0 | 0.4 | 0.8 | 0.2 | 0.2 | 0.4 | 0.6 |

[Table 10]

| Item | | | Unit | Comparative Example 11 | Comparative Example 12 | Comparative Example 13 |
|---|---|---|---|---|---|---|
| Raw material composition | PEa | Mv | 10,000 | 30 | 30 | 30 |
| | | Composition ratio | % by mass | 46 | 46 | 80 |
| | PEb | Mv | 10,000 | 70 | 70 | - |
| | | Composition ratio | % by mass | 45 | 45 | - |
| | PEc | Mv | 10,000 | - | - | - |
| | | Composition ratio | % by mass | - | - | - |
| | PPa | Kind | - | Homopolymer | Homopolymer | Homopolymer |
| | | Mv | 10,000 | 15 | 35 | 1.9 |
| | | Composition ratio | % by mass | 5 | 5 | 10 |
| | PPb | Kind | - | Homopolymer | Homopolymer | Homopolymer |
| | | Mv | 10,000 | 25 | 40 | 32 |
| | | Composition ratio | % by mass | 4 | 4 | 10 |
| | Polymer concentration | | % by mass | 37 | 37 | 55 |
| Sheet thickness | | | μm | 1650 | 1650 | 1000 |
| Biaxial stretching conditions | Stretch ratio (MD) | | Times | 7.0 | 7.0 | 7.0 |
| | Stretch ratio (TD) | | Times | 6.4 | 6.4 | 6.4 |
| | Stretching temperature | | °C | 121 | 121 | 118 |
| Heat setting conditions | Stretch ratio | | Times | 1.5 | 1.5 | 1.3 |
| | Stretching temperature | | °C | 123 | 123 | 120 |
| | Relaxation temperature | | °C | 128 | 128 | 123 |
| | Relaxation ratio | | Times | 0.87 | 0.87 | 0.85 |
| Physical properties of polyolefin microporous film | Film thickness | | μm | 16 | 16 | 20 |
| | Porosity | | % | 43 | 43 | 46 |
| | Air permeability | | sec | 310 | 320 | 400 |
| | Puncture strength | | N | 4.8 | 5.0 | 2.5 |
| | Shutdown temperature | | °C | 139 | 139 | 139 |
| | Meltdown temperature | | °C | 200< | 200< | 180 |
| Occurrence rate of raised edge roll | | | % | 1.0 | 1.0 | 3.0 |

As is clear from the results shown in Tables 9 and 10, these microporous films according to the present invention can provide a roll in which the occurrence of the raised edges is reduced.

This application is based on Japanese Patent Application (Japanese Patent Application No. 2008-091573) filed on March 31, 2008, and Japanese Patent Application (Japanese Patent Application No. 2008-091572) filed on March 31, 2008, and the contents thereof are incorporated herein by reference.

Industrial Applicability

According to the present invention, a polyolefin microporous film having less raised edge can be obtained. Then, yield and high-speed productivity at a slitting step and a battery producing step can be improved. Moreover, according to the present invention, a polyolefin microporous film having a film thickness of 1 to 14 $\mu$m and less raised edge can be obtained. Then, yield at a slitting step and a battery producing step can be improved. The polyolefin microporous film also has high safety.

**Claims**

1.    A polyolefin microporous film formed from a polyolefin composition comprising

(i) a polyethylene,
(ii) a first polypropylene having a viscosity average molecular weight of more than 50,000 and less than 300,000, and
(iii) a second polypropylene having a viscosity average molecular weight of not less than 300,000;

wherein the first polypropylene comprises a polypropylene homopolymer containing ethylene in an amount of not more than 1.0 % by mol, or a polypropylene copolymer containing ethylene in an amount of not more than 30 % by mol; and
wherein the total amount of polyethylene in the polyolefin composition is not more than 97 % and not less than 70 % by mass; the total amount of polypropylene in the polyolefin composition is not less than 3 % and not more than 30 % by mass; and the mass ratio of the first polypropylene is 30 to 70 % by mass based on the total amount of the first and the second polypropylene.

2.    The polyolefin microporous film according to claim 1, wherein the viscosity average molecular weight of the second polypropylene is 300,000 to 1,000,000.

3.    The polyolefin microporous film according to claim 1 or 2, wherein the viscosity average molecular weight of the polyethylene is 50,000 to 10,000,000.

4.    The polyolefin microporous film according to any one of claims 1 to 3, wherein the film has a thickness of 1 to 14 $\mu$m.

5.    The polyolefin microporous film according to any one of claims 1 to 4, wherein the film has a tensile strength at break in a transverse direction of 100 to 230 MPa.

6.    The polyolefin microporous film according to any one of claims 1 to 5, wherein the film has a tensile elongation at break in a transverse direction of 10 to 110%.

7.    The polyolefin microporous film according to any one of claims 1 to 6, wherein the ratio of the tensile strength at break in a longitudinal direction to the tensile strength at break in a transverse direction is 0.8 to 1.3.

8.    The polyolefin microporous film according to any one of claims 1 to 7, wherein a thermal shrinkage rate in a transverse direction at 130°C is not more than 20%.

9.    The polyolefin microporous film according to any one of claims 1 to 8, wherein the polyolefin composition comprises a polyethylene having a viscosity average molecular weight higher than the viscosity average molecular weight of the first polypropylene.

10.    The polyolefin microporous film according to any one of claims 1 to 9, wherein the polyolefin composition comprises a polyethylene having a viscosity average molecular weight higher than the viscosity average molecular weight of the first polypropylene and lower than the viscosity average molecular weight of the second polypropylene.

11.    The polyolefin microporous film according to any one of claims 1 to 10, wherein the polyolefin composition comprises a polyethylene having a viscosity average molecular weight equal to or higher than the viscosity average molecular weight of the second polypropylene.

**12.** A separator for a lithium ion battery, comprising a polyolefin microporous film according to any one of claims 1 to 11.

**13.** A roll comprising a polyolefin microporous film according to any one of claims 1 to 11, the polyolefin microporous film being wound.

**Patentansprüche**

**1.** Mikroporöse Polyolefinfolie, die aus einer Polyolefinzusammensetzung gebildet ist, welche Folgendes umfasst:

(i) ein Polyethylen;
(ii) ein erstes Polypropylen mit einem Viskositätsmittel des Molekulargewichts von mehr als 50 000 und weniger als 300 000; und
(iii) ein zweites Polypropylen mit einem Viskositätsmittel des Molekulargewichts von nicht weniger als 300 000;

wobei das erste Polypropylen ein Polypropylen-Homopolymer, das Ethylen in einer Menge von nicht mehr als 1,0 Mol-% enthält, oder ein Polypropylen-Copolymer, das Ethylen in einer Menge von nicht mehr als 30 Mol-% enthält, umfasst; und
wobei die Gesamtmenge an Polyethylen in der Polyolefinzusammensetzung nicht mehr als 97 Massen-% und nicht weniger als 70 Massen-% beträgt, die Gesamtmenge an Polypropylen in der Polyolefinzusammensetzung nicht weniger als 3 Massen-% und nicht mehr als 30 Massen-% beträgt und der Massenanteil des ersten Polypropylens 30 bis 70 Massen-% beträgt, bezogen auf die Gesamtmenge des ersten und des zweiten Polypropylens,

**2.** Mikroporöse Polyolefinfolie gemäß Anspruch 1, wobei das Viskositätsmittel des Molekulargewichts des zweiten Polypropylens 300 000 bis 1000 000 beträgt.

**3.** Mikroporöse Polyolefinfolie gemäß Anspruch 1 oder 2, wobei das Viskositätsmittel des Molekulargewichts des Polyethylens 50 000 bis 10 000 000 beträgt.

**4.** Mikroporöse Polyolefinfolie gemäß einem der Ansprüche 1 bis 3, wobei die Folie eine Dicke von 1 bis 14 $\mu$m aufweist.

**5.** Mikroporöse Polyolefinfolie gemäß einem der Ansprüche 1 bis 4, wobei die Folie eine Reißfestigkeit in Querrichtung von 100 bis 230 MPa aufweist.

**6.** Mikroporöse Polyolefinfolie gemäß einem der Ansprüche 1 bis 5, wobei die Folie eine Reißdehnung in Querrichtung von 10 bis 110% aufweist.

**7.** Mikroporöse Polyolefinfolie gemäß einem der Ansprüche 1 bis 6, wobei das Verhältnis der Reißfestigkeit in Längsrichtung zur Reißfestigkeit in Querrichtung 0,8 bis 1,3 beträgt.

**8.** Mikroporöse Polyolefinfolie gemäß einem der Ansprüche 1 bis 7, wobei die thermische Schrumpfrate in Querrichtung bei 130 °C nicht mehr als 20% beträgt.

**9.** Mikroporöse Polyolefinfolie gemäß einem der Ansprüche 1 bis 8, wobei die Polyolefinzusammensetzung ein Polyethylen mit einem Viskositätsmittel des Molekulargewichts umfasst, das höher ist als das Viskositätsmittel des Molekulargewichts des ersten Polypropylens.

**10.** Mikroporöse Polyolefinfolie gemäß einem der Ansprüche 1 bis 9, wobei die Polyolefinzusammensetzung ein Polyethylen mit einem Viskositätsmittel des Molekulargewichts umfasst, das höher ist als das Viskositätsmittel des Molekulargewichts des ersten Polypropylens und niedriger ist als das Viskositätsmittel des Molekulargewichts des zweiten Polypropylens.

**11.** Mikroporöse Polyolefinfolie gemäß einem der Ansprüche 1 bis 10, wobei die Polyolefinzusammensetzung ein Polyethylen mit einem Viskositätsmittel des Molekulargewichts umfasst, das gleich groß oder höher ist als das Viskositätsmittel des Molekulargewichts des zweiten Polypropylens.

**12.** Separator für eine Lithiumionenbatterie, der eine mikroporöse Polyolefinfolie gemäß einem der Ansprüche 1 bis 11 umfasst.

**13.** Rolle, die eine mikroporöse Polyolefinfolie gemäß einem der Ansprüche 1 bis 11 umfasst, wobei die mikroporöse Polyolefinfolie aufgewickelt ist.

**Revendications**

**1.** Film microporeux de polyoléfine formé d'une composition de polyoléfine comprenant

(i) un polyéthylène,
(ii) un premier polypropylène présentant une masse moléculaire moyenne par viscosité supérieure à 50 000 et inférieure à 300 000, et
(iii) un second polypropylène présentant une masse moléculaire moyenne par viscosité d'au moins 300 000 ;

dans lequel le premier polypropylène comprend un homopolymère de polypropylène contenant de l'éthylène dans une quantité d'au plus 1,0 % en mol, ou un copolymère de polypropylène contenant de l'éthylène dans une quantité d'au plus 30 % en mol ; et
dans lequel la quantité totale de polyéthylène dans la composition de polyoléfine est d'au plus 97 % et n'est pas inférieure à 70 % en masse ; la quantité totale de polypropylène dans la composition de polyoléfine n'est pas inférieure à 3 % et n'est pas supérieure à 30 % en masse ; et le rapport massique du premier polypropylène est de 30 à 70 % en masse rapporté à la quantité totale du premier et du second polypropylène.

**2.** Film microporeux de polyoléfine selon la revendication 1, dans lequel la masse moléculaire moyenne par viscosité du second polymère est de 300 000 à 1 000 000.

**3.** Film microporeux de polyoléfine selon la revendication 1 ou 2, dans lequel la masse moléculaire moyenne par viscosité du polyéthylène est de 50 000 à 10 000 000.

**4.** Film microporeux de polyoléfine selon l'une quelconque des revendications 1 à 3, dans lequel le film présente une épaisseur de 1 à 14 $\mu$m.

**5.** Film microporeux de polyoléfine selon l'une quelconque des revendications 1 à 4, dans lequel le film présente une résistance à la rupture par traction dans une direction transversale de 100 à 230 MPa.

**6.** Film microporeux de polyoléfine selon l'une quelconque des revendications 1 à 5, dans lequel le film présente un allongement à la rupture par traction dans une direction transversale de 10 à 110 %.

**7.** Film microporeux de polyoléfine selon l'une quelconque des revendications 1 à 6, dans lequel le rapport de la résistance à la rupture par traction dans une direction longitudinale à la résistance à la rupture par traction dans une direction transversale est de 0,8 à 1,3.

**8.** Film microporeux de polyoléfine selon l'une quelconque des revendications 1 à 7, dans lequel un taux de retrait thermique dans une direction transversale à 130°C est d'au plus 20 %.

**9.** Film microporeux de polyoléfine selon l'une quelconque des revendications 1 à 8, dans lequel la composition de polyoléfine comprend un polyéthylène présentant une masse moléculaire moyenne par viscosité supérieure à la masse moléculaire moyenne par viscosité du premier polypropylène.

**10.** Film microporeux de polyoléfine selon l'une quelconque des revendications 1 à 9, dans lequel la composition de polyoléfine comprend un polyéthylène présentant une masse moléculaire moyenne par viscosité supérieure à la masse moléculaire moyenne par viscosité du premier polypropylène et inférieure à la masse moléculaire moyenne par viscosité du second polypropylène.

**11.** Film microporeux de polyoléfine selon l'une quelconque des revendications 1 à 10, dans lequel la composition de polyoléfine comprend un polyéthylène présentant une masse moléculaire moyenne par viscosité supérieure ou égale à la masse moléculaire moyenne par viscosité du second polypropylène.

**12.** Séparateur pour un accumulateur aux ions lithium, comprenant un film microporeux de polyoléfine selon l'une quelconque des revendications 1 à 11.

**13.** Rouleau comprenant un film microporeux de polyoléfine selon l'une quelconque des revendications 1 à 11, le film microporeux de polyoléfine étant enroulé.

## (A)

## (B)

## (C)

*FIG. 1*

RAISED
EDGE
PORTION

NORMAL
PORTION

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006124652 A
- JP 3699561 B
- JP 3746848 B
- JP 2001229971 A

- JP H06208849 B
- JP 2004152614 B
- JP 2008091573 A
- JP 2008091572 A